(19) **Europäisches Patentamt**
**European Patent Office**
**Office européen des brevets**

(11) **EP 1 472 322 B1**

(12) **EUROPEAN PATENT SPECIFICATION**

(45) Date of publication and mention
of the grant of the patent:
**04.06.2008 Bulletin 2008/23**

(21) Application number: **02790062.0**

(22) Date of filing: **09.12.2002**

(51) Int Cl.:
**C09J 7/02** *(2006.01)*

(86) International application number:
**PCT/US2002/039315**

(87) International publication number:
**WO 2003/066766 (14.08.2003 Gazette 2003/33)**

(54) **FLAME RETARDANT FOAMS**

FLAMMGESCHÜTZTE SCHAUMSTOFFE

MOUSSES RETARDATRICES DE FLAMME

(84) Designated Contracting States:
**AT BE BG CH CY CZ DE DK EE ES FI FR GB GR
IE IT LI LU MC NL PT SE SI SK TR**

(30) Priority: **04.02.2002 US 66990**

(43) Date of publication of application:
**03.11.2004 Bulletin 2004/45**

(73) Proprietor: **3M Innovative Properties Company**
**St. Paul, MN 55133-3427 (US)**

(72) Inventors:
• **KOBE, James, J.**
**Saint Paul, MN 55133-3427 (US)**

• **FISCHER, Patrick, J.**
**Saint Paul, MN 55133-3427 (US)**
• **SPENCER, Lee, F. , Jr.**
**Saint Paul, MN 55133-3427 (US)**
• **ZHOU, Zhiming**
**Saint Paul, MN 55133-3427 (US)**

(74) Representative: **Meyers, Hans-Wilhelm et al**
**Patentanwälte**
**von Kreisler-Selting-Werner**
**Postfach 10 22 41**
**50462 Köln (DE)**

(56) References cited:
**WO-A-01/57151          US-A- 6 103 152**

**Description**

This invention relates to a flame-retardant foam substrate, articles comprising the foam substrate and methods of making the flame-retardant foam substrates.

## Background Of The Invention

Articles incorporating a polymer foam core are characterized by the density of the foamed polymer being lower than the density of the pre-foamed polymeric matrix. The lowered density for the foam may be achieved in several known ways such as by foaming with chemical blowing agents or by interspersing microspheres within the matrix, the microspheres typically being made of glass or of certain polymeric materials.

Articles that include polymer foams are described, for example, in United States Letters Patent No. 6,103,152 issued to Gehlsen et al. on August 15, 2000. The Gehlsen '152 patent describes articles that include a polymer foam featuring a polymer matrix and one or more expandable polymer microspheres. The foam microstructure is characterized by a plurality of enlarged polymeric microspheres distributed throughout the polymer matrix. At least one of the microspheres is still expandable, i.e., upon application of heat it will expand further without breaking. The foam may be formulated with an adhesive surface and is characterized by a surface that is substantially smooth.

Any of a variety of articles can include a polymer foam core such as, for example, vibration damping articles, medical dressings, retroreflective sheeting, tape, anti-fatigue matting, abrasive articles, gaskets, assemblies, and sealants.

In applications for tapes and other articles, a fire retardant feature may be needed and, in certain applications, may be required by applicable regulations. For example, tapes to be used in electric or electronic applications may be directly exposed to electrical current, to short circuits, and/or to heat generated from the use of the associated electronic component or electrical device. Consequently, industry standards or regulations may impose conditions on the use of such tape articles that require qualifying tests be performed on the tapes such as bum tests, and the like. For electrical and electronics applications, the industry standard flammability test is Underwriters Laboratories (UL 94 "Standard for Tests for Flammability of Plastic Materials for Parts in Devices and Appliances"). For rail transit and transportation applications, the industry standard is American Society for Testing and Materials ASTM E662 ("Test Method for Specific Optical Density of Smoke Generated by Solid Materials") and ASTM E162 ("Test for Surface Flammability of Materials Using a Radiant Energy Source"). For aerospace applications, the testing criteria for the Federal Aviation Administration F.A.R. § 25.853 (July 199Q) vertical bum test, subparagraph (a)(1)(i), relates to interior compartments occupied by crews or passengers, including interior ceiling panels, interior wall panels, partitions, galley structures, large cabinet walls, structural flooring, and materials used in the construction of stowage compartments. F.A.R. § 25.853 (July 199Q) subparagraph (a)(1)(ii) relates to seat cushions, padding, decorative and nondecorative coated fabrics, leather, trays and galley furnishings, electrical conduit, thermal and acoustical insulation and insulation covering air ducting, joint and edge covering and the like. Materials used for these applications must be self-extinguishing when tested vertically in accordance with the procedures ofF.A.R. § 25.853 (July 1990) (a)(1)(i) and (a)(I)(ii). In addition for both rail transit and aerospace applications, another industry standard is Boeing Specification Support Standard, BSS 7239 ("Test Method for Toxic Gas Generation by Materials of Combustion") which requires analysis of combustion gases and has specified concentration limits on toxic gases which currently include HCN, $NO_x$, CO, HCl, HF, and $SO_2$.

In order to meet the requirements imposed on them in such applications, tapes and other articles may be made with materials that are naturally resistant to fire as well as materials that have been processed or manufactured to impart a fire retarding or fire resistant quality by incorporating fire retardant agents and the like.

In electric and electronic applications, for example, it may be desirable to use foam materials similar to those described by the Gehlsen '152 patent but possessing flame retardant properties in the product. However, the use of fire retardant foam tapes used in electronic applications has been problematic because the inclusion of fire retardant substances in a foamed pressure sensitive adhesive often diminishes the effectiveness of the adhesive. This is especially challenging for fire retardant foam tapes that have an adhesive on both sides. Moreover, fire retardant skin adhesives applied to one or both major surfaces of a fire retardant foam have performed poorly, further preventing serious consideration of fire retardant foam tapes in electrical or electronic applications, transportation applications, and aerospace applications. Finally, the use of certain fire retardant substances has raised public health issues, particularly in Europe, where specific brominated fire retardants have been identified as potentially hazardous because of environmental concerns and the possible bioaccumulation of these materials.

Consequently, it is desirable to provide fire-retardant foamed adhesive substrates, articles including such substrates (e.g., tapes, in particular, double sided tapes), and methods for the manufacture of the articles. It is also desirable to provide fire-retardant foamed adhesive substrates that strongly bond or adhere to surfaces so that foam and tape articles can be designed for use in new applications. It is also desirable to provide the foregoing articles in a fire retardant construction.

## Summary Of The Invention

In a first aspect, the invention provides a flame retardant article, comprising: An expanded polymeric foam material comprising a polymer, a nort-hatogenated, antimony-free fire retardant and a plurality of microspheres, the foam material having an outer surface; and an adhesive layer associated with the outer surface.

The polymeric foam material may be selected from any of a variety of polymeric materials such as acrylate polymers and methacrylate polymers, acrylate and methacrylate copolymers, and combinations of the foregoing. Foam layers comprising a copolymer of ethylhexyl acrylate and acrylic acid are described as well as foams comprising a copolymer of isooctyl acrylate and acrylic acid. Other foam layers such as thermoplastic polymer materials including synthetic block copolymer adhesives may also be used and are further described herein. The adhesive layer may be a pressure sensitive adhesive such as, for example, a copolymer of ethylhexyl acrylate and acrylic acid, a copolymer of isooctyl acrylate and acrylic acid, a rubber based adhesive, a silicone adhesive, a blend of rubber based adhesive and acrylic adhesive, and combinations thereof . Likewise, the adhesive layer may be a heat-activated adhesive. The antimony free fire retardant being an intumescent material comprising an acid source a char former a blowing agent and one or more synergists selected from the group consisting of n-alkoxy hindered amine, tris(tribromoneopentyl)phosphate, melamine phosphate, melamine polyphosphate, and boroxo siloxane elastomer. Either or both of the foam layer and/or the adhesive layer may be provided with polymeric microfibers therein, the microfibers imparting stretch release properties to the article. The microfibers may comprise copolymers of polyalkylene resins such as ethylene copolymerized with a $C_3$ - $C_{10}$ alkylene. Typical microfibers according to the invention may comprise a copolymer of polyoctene- ethylene, and/or a copolymer of polyhexene-ethylene, for example.

Certain terms are used herein in describing the preferred embodiment of the invention. All such terms are intended to be interpreted in a manner consistent with their usage by those skilled in the art. For convenience, by way of example and not limitation, the following meanings are set forth:

"Intumescent" or "Intumescence" refers to materials or properties of materials, specifically the foaming or swelling of a material when exposed to high surface temperatures or flames;

"Intumescent fire retardant" refers to an intumescent substance that when applied to or incorporated within a combustible material, reduces or eliminates the tendency of the material to ignite when exposed to heat or flame; and in general, when exposed to flame, the intumescent induces charring and liberates non-combustible gases to form a carbonific foam which protects the matrix, cuts off the oxygen supply, and prevents dripping. Intumescent fire retardants generally comprise an acid source, a char former, and a blowing agent.

"Fire retardant" refers to a substance that when applied to or incorporated within a combustible material, reduces or eliminates the tendency of the material to ignite when exposed to heat or flame; and

"Stretch release" refers to the property of an adhesive article characterized in that, when the article is pulled and elongated from a substrate surface at a rate of 30 centimeters/minute and at an angle of 45° or less, the article detaches from a substrate surface without leaving a significant amount ofvisible residue on the substrate.

In another aspect, the invention provides a method for preparing a fire retardant foam article according to claim 6.

In this aspect of the invention, the identities and the physical and chemical characteristics of the materials used to prepare a fire retardant foam article are the same as those previously described. In order to provide a foam article having stretch release properties, fiber-forming resins are added to the expandable extrudable composition and/or to the adhesive composition to form the microfibers *in situ* during the manufacturing process.

The invention also provides articles made according to the foregoing method such as tapes and the like.

Other features and advantages of the invention will be apparent to those practicing in the art upon consideration of the Detailed Description. Of The Preferred Embodiment, and from the appended claims.

## Brief Description Of The Drawings

In describing the various features of the preferred embodiment, reference is made to the various Figures, in which like reference numerals indicate like features and wherein:

Figure 1 is a perspective drawing showing a foam;
Figure 2 is a perspective drawing showing a foam having a patterned surface;
Figure 3 is a perspective drawing of an article featuring a foam core with a plurality of foam stripes;
Figure 4 is a perspective drawing of an article featuring a foam combined with a skin adhesive layer;
Figure 5 is a perspective drawing of an article featuring a foam core with a plurality of foam stripes combined with multiple additional skin adhesive layers; and
Figure 6 is a schematic drawing of an extrusion processor for preparing articles according to the invention.

**Detailed Description Of The Preferred Embodiment**

The invention provides foam articles comprising a fire retardant polymer foam and a skin adhesive associated with an outer surface of the foam. The foam may also comprise one or more polymer microspheres capable of further expansion when heated. The outer surface of the foam may be substantially smooth or it may be patterned. At least a portion of the outer surface may serve as a substrate for films and the like, thus providing any of a variety of tape articles. The skin adhesive is typically formulated without fire retardant, and the foam may be provided in any of a variety of configurations including sheets, rods, or cylinders.

Articles comprising the fire retardant foam core tape of the invention and/or the skin adhesive layer(s) applied to the surfaces of the foam can have a high adhesion when applied to a panel. The desired characteristics of a foam tape according to the invention include (1) foam split strength greater than about 2.64 kN/m ( >15 lbs/inch) ; (2) 90 degree peel adhesion of greater than about 2.64 kN/m ( > 15 lbs/inch); and (3) static shear strength at 22° C or 70°C of at least about 10, 000 minutes when tested according to the test methods described below.

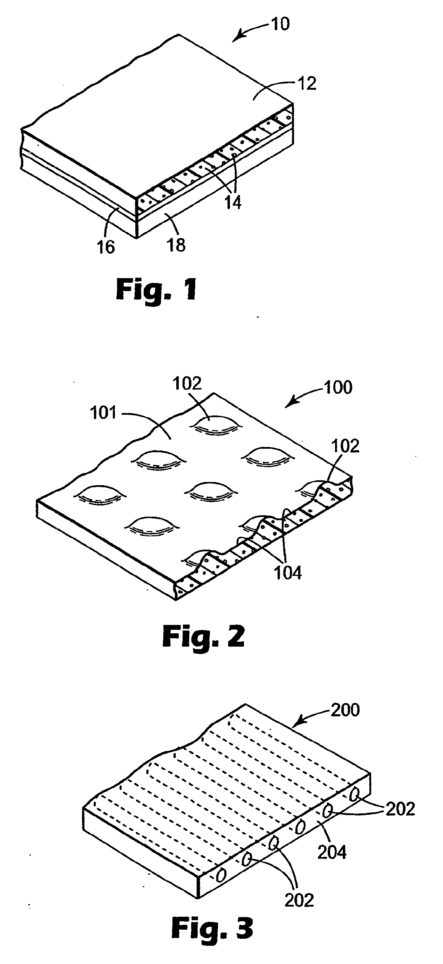

One example of a foam article according to the invention is shown in Figure 1. The article is in the form of a sheet 10 having a first flat surface 12 and a second surface (not shown) opposite the first surface 12. According to the invention, at least one fire retardant substance is interspersed throughout the foam sheet 10. The fire retardant materials suitable for inclusion herein include any of a variety of such substances as defined in claim 1, but preferably comprise materials that are non-halogenated. The foam sheet 10 further comprises a polymer matrix with a plurality of expanded cells 14 interspersed within the matrix. The expanded cells 14 are the result of the foaming process used in the manufacture of the sheet 10 and may be created through the use, for example, of chemical blowing agents or by the inclusion of expandable polymeric or glass microspheres or combinations thereof. If microspheres are included in the manufacture of the sheet 10, the cells 14 typically comprise the polymer microspheres in an expanded and unbroken form. A skin adhesive layer 16 is provided on one of the surfaces of the sheet 10. The adhesive 16 may comprises any of a variety of adhesive materials as are further described herein. Most typically, the adhesive layer 16 may be a pressure sensitive adhesive, and the adhesive is generally formulated without fire retardant materials therein. However, small amounts of fire retardant may be included within the adhesive to impart fire retardant properties to the adhesive. Specifically, it may be desirable to add a small amount of fire retardant to the skin adhesive in very thin (i.e., less than about 0.635 mm (0.025 inches) fire retardant foam articles. A release liner 18 may optionally be included to protect the adhesive layer 16 prior to the application of the adhesive 16 to another substrate or the like.

It will be appreciated that other layers and/or structures may be applied or affixed to the first surface 12 of the sheet 10. In associating other layers or structures with the surface I2, a layer of a a skin adhesive may first be applied to the first surface 12 to bond the additional layers or structures to the surface 12. Likewise, the sheet 10 may be provided as a two-sided tape having another adhesive layer on surface opposite the first surface 12. A release liner or the like may be associated with the skin adhesive(s) on either or both of the surfaces of the sheet 10.

Any of a variety of different polymer materials may be used in the formulation of the foam including elastomers, rubbers, thermoplastic elastomers, rubber based and acrylic adhesives and blends thereof. Typically, the polymer resins are of the type that are suitable for melt extrusion processing, as described in United States Patent 6,143,152 (Gehlsen et al.) issued on August 15, 2000. It may be desirable to blend two or more polymers having chemically different compositions. The physical properties of the foam can be optimized by varying the types of components used in creating the foam and by varying their relative concentrations. A particular resin is generally chosen or selected based upon the desired properties of the final foam-containing article.

One group of polymers useful in the manufacture of the foams of the present invention include acrylate and methacrylate polymers and copolymers and combinations thereof. Such polymers can be formed by polymerizing one or more monomeric acrylic or methacrylic esters of non-tertiary alkyl alcohols, with the alkyl groups having from 1 to 20 carbon atoms. Suitable acrylate monomers include methyl acrylate, ethyl acrylate, n-butyl acrylate, lauryl acrylate, 2-ethylhexyl acrylate, cyclohexyl acrylate, iso-octyl acrylate, octadecyl acrylate, nonyl acrylate, decyl acrylate, and dodecyl acrylate. The corresponding methacrylates are useful as well. Also useful are aromatic acrylates and methacrylates, e.g., benzyl acrylate and cyclobenzyl acrylate.

Optionally, one or more monoethylenically unsaturated co-monomers may be polymerized with the acrylate or methacrylate monomers; the particular amount of comonomer is selected based upon the desired properties of the polymer. One group of useful co-monomers includes those having a homopolymer glass transition temperature greater than the glass transition temperature of the acrylate homopolymer. Examples of suitable co-monomers falling within this group include acrylic acid, acrylamide, methacrylamide, substituted acrylamides such as N,N-dimethyl acrylamide, itaconic acid, methacrylic acid, acrylonitrile, methacrylonitrile, vinyl acetate, N-vinyl pyrrolidone, isobornyl acrylate, cyano ethyl acrylate, N-vinylcaprolactam, maleic anhydride, hydroxyalkylacrylates, N,N-dimethyl aminoethyl (meth)acrylate, N,N-diethylacrylamide, beta-carboxyethyl acrylate, vinyl esters of neodecanoic, neononanoic, neopentanoic, 2-ethylhexanoic, or propionic acids (e.g., available from Union Carbide Corp. of Danbury, Connecticut under the designation VYNATES), vinylidene chloride, styrene, vinyl toluene, and alkyl vinyl ethers.

Another group of monoethylenically unsaturated co-monomers which may be polymerized with the acrylate or methacrylate monomers includes those having a homopolymer glass transition temperature less than the glass transition temperature of the acrylate homopolymer. Examples of suitable co-monomers falling within this class include ethyloxyethoxy ethyl acrylate (Tg= -71° C.) and a methoxypolyethylene glycol 400 acrylate (Tg of -65° C.; available from Shin Nakamura Chemical Co., Ltd. under the designation NK ESTER AM-90G) and combinations thereof.

Another group of polymers useful in the manufacture of the foam includes polymers that are immiscible with acrylic adhesives. Examples include semicrystalline polymer resins such as polyolefins and polyolefin copolymers (e.g., based upon monomers having between 2 and 8 carbon atoms such as low density polyethylene, high density polyethylene, polypropylene, ethylene-propylene copolymers, etc.), polyesters and copolyesters, polyamides and co-polyamides, fluorinated homopolymers and copolymers, polyalkylene oxides (e.g., polyethylene oxide and polypropylene oxide), polyvinyl alcohol, ionomers (e.g., ethylene-methacrylic acid copolymers neutralized with base), and cellulose acetate and combinations thereof. Other examples of immiscible polymers include thermoplastic polyurethanes, aromatic epoxies, polycarbonate, amorphous polyesters, amorphous polyamides, ABS copolymers, polyphenylene oxide alloys, ionomers (e.g., ethylene-methacrylic acid copolymers neutralized with salt), fluorinated elastomers, polydimethyl siloxane, ethylene propylene rubber, thermoplastic elastomers and combinations thereof.

Another group of polymers useful as a foam in the present invention includes elastomers containing ultraviolet radiation-sensitive groups. Examples include polybutadiene, polyisoprene, polychloroprene, random and block copolymers of styrene and dienes (e.g., SBR), and ethylene-propylene-diene monomer rubber and combinations thereof.

Another group of polymers useful as a foam in the present invention includes pressure sensitive and hot melt adhesives prepared from non-photopolymerizable monomers. Such polymers can be adhesive polymers (i.e., polymers that are inherently adhesive), or polymers that are not inherently adhesive but are capable of forming adhesive compositions when compounded with tackifiers. Specific examples include polyurethanes, poly-alpha-olefins (e.g., polyoctene, polyhexene, and atactic polypropylene), block copolymer-based adhesives, natural and synthetic rubbers, silicone adhesives, ethylene-vinyl acetate, and epoxy-containing structural adhesive blends (e.g., epoxy-acrylate and epoxy-polyester blends) and combinations thereof.

One or more expanded polymer microspheres are typically included in the polymer foam. An expandable polymeric microsphere comprises a polymer shell and a core material in the form of a gas, liquid, or combination thereof. Upon heating to a temperature at or below the melt or flow temperature of the polymeric shell, the polymer shell will expand. Examples of suitable core materials include propane, butane, pentane, isobutane, neopentane, or similar material and combinations thereof. The identity of the thermoplastic resin used for the polymer microsphere shell can influence the mechanical properties of the foam, and the properties of the foam may be adjusted by the choice of microsphere, or by using mixtures of different types of microspheres. For example, acrylonitrile-containing resins are useful where high tensile and cohesive strength are desired in a low density foam article. This is especially true where the acrylonitrile content is at least 50% by weight of the resin used in the polymer shell, generally at least 60% by weight, and typically at least 70% by weight.

Examples of suitable thermoplastic resins which may be used as the shell include acrylic and methacrylic acid esters such as polyacrylate; acrylate-acrylonitrile copolymer; and methacrylate-acrylic acid copolymer. Vinylidene chloride-containing polymers such as vinylidene chloride-methacrylate copolymer, vinylidene chloride-acrylonitrile copolymer, acrylonitrile-vinylidene chloride-methacrylonitrile-methyl acrylate copolymer, and acrylonitrile-vinylidene chloride-methacrylonitrile-methyl methacrylate copolymer may also be used, but may not be desired if high strength is sought. In general, where high strength is desired, the microsphere shell will have no more than 20% by weight vinylidene chloride and typically no more than 15% by weight vinylidene chloride. High strength applications may require microspheres with essentially no vinylidene chloride. Halogen free microspheres may also be used in the foams of the invention.

As was mentioned, the foam in the articles of the invention comprises polymeric microspheres. Examples of suitable commercially available expandable polymeric microspheres include those available from Pierce Stevens (Buffalo, N.Y.) under the designations "F30D," "F80SD," and "F100D." Also suitable are expandable polymeric microspheres available from Akzo-Nobel under the designations EXPANCEL 551, EXPANCEL 461, EXPANCEL 091 and EXPANCEL 092 MB 120.

The amount of expandable microspheres is selected based upon the desired properties of the foam article. In general, the higher the microsphere concentration, the lower the density of the foam. The amount of microspheres in the polymer resin typically ranges from about 0.1 parts by weight to about 20 parts by weight (based upon 100 parts of polymer resin), more preferably from about 0.5 parts by weight to about 10 parts by weight.

Fire retardants suitable for inclusion in the foams of the present invention include intumescent antimony free fire retardants which are generally present in the foam at a concentration of between about 20 wt.% and about 60 wt%. Examples of suitable fire retardants for use in the foams described herein include those commercially available from Clariant Corporation of Charlotte, NC, under the designation EXOLIT, including those designated, AP 750, and AP 752 (TP), all of which are non-halogenated fire retardants comprising ammonium polyphosphate and synergists. Synergists are other fire retardant materials that, when combined with another fire retardant, provide enhanced fire retardant properties greater than the additive properties of the two fire retardant materials. Other fire retardants may be included, such as EXOLIT OP grade materials, such as, OP 550, OP 910, OP 920(TP), OP 92 (TP), OP 1100 (TP), EXOLIT 5060, EXOLIT 5073, EXOLIT 5085(VP), and EXOLIT 5087, also from Clariant Corporation, based on organophosphorous compounds are also useful as well as EXOLIT RP grades of red phosphorus materials, such as, RP 622, RP 650, RP 652, RP 654, RP 658, RP 659(TP), RP 693(TP), RP 689(TP), RP 692, RP 693, and RP 694. Other non-halogenated fire retardants that may be used include FIREBRAKE ZB and BORGARD ZB which are zinc borate and zinc borate hydrate respectively, ammonium borate / diborate / tetraborate tetrahydrate, ammonium pentaborate x $8H_2O$, FYREX which is a mixture of diammonium and monoammonium phosphate, available from Akzo Nobel, Gallipolis Ferry, West Virginia, triphenyl phosphate, di-melamine phosphate, potassium bicarbonate, potassium aluminum sulfate, MELAPUR 25 and MELAPUR p-46 which are both melamine cyanurates; MELAPUR 200 which is melamine polyphosphate, all three of which are available from DSM Melamine Americas, Inc. Westwego, LA; AMGARD NH which is melamine phosphate and AMGARD NP which is ethylene diamine phosphate, both of which are available from Albright & Wilson Americas Inc., Richmond, VA; aluminum trihydrate (ATH), magnesium oxide, and magnesium hydroxide. Useful halogenated phosphate fire retardants that may be used include TCEP (tris(2-chloroethyl)phosphate) and TCPP (tris(2-chloroisopropyl)phosphate) both of which are available from Clariant Corporation, and FR 370 (tris(tribromoneopentyl) phosphate) available from Dead Sea Bromine Group, Beer Shiva, Israel.

Blends of one or more fire retardants are used in the foams of the invention. Suitable blends include blends of EXOLIT AP 750 and FR370 in a weight ratio ranging from about 10:90 (5:95)to about 90:10(95:5). Blends of one or more fire retardants and a synergist may also be used in the foams of the invention. Suitable synergists include talc, magnesium compounds, zinc compounds such as zinc borate, Fe2O3, MoO3, special zeolite, boroxo siloxane elastomer, which are discussed in article "Influence of Modified Rheology on the Efficiency of Intumescent Flame Retardant Systems", P. Anna et al., Polymer Degradation and Stability, Vol. 74 (3), 2001, pp. 423 to 426. A synergist for both brominated and phosphorus fire retardants is CIBA FLAMESTAB NOR 116 fire retardant material available from Ciba, Tarrytown, NY. There appears to be a synergy between the ammonium polyphosphate based intumescent fire retardants with brominated phosphate (FR 370), melamine phosphate, and/or melamine polyphosphate fire retardants. While halogenated fire retardant materials are generally not preferred, some halogenated materials may be effective in the present invention. For example FR 370 which is tris(tribromoneopentyl) phosphate is a very effective fire retardant and is currently has not been identified by environmental groups as a troublesome substance. Selection of the fire retardant system will be determined by various parameters, for example, the industry standard for the desired application, and by composition of the foam polymer matrix.

The foam may also include a number of other additives. Examples of suitable additives include tackifiers (e.g., rosin esters, terpenes, phenols, and aliphatic, aromatic, or mixtures of aliphatic and aromatic synthetic hydrocarbon resins), plasticizers, pigments, dyes, non-expandable polymeric or glass microspheres, reinforcing agents, hydrophobic or hydrophilic silica, calcium carbonate, toughening agents, fibers, fillers, nanoparticles such as nanoclays, conductive particles, antioxidants, finely ground polymeric particles such as polyester, nylon, or polypropylene, stabilizers, and combinations thereof. Chemical blowing agents may be added as well. The foregoing additional agents and components are generally added in amounts sufficient to obtain a foam article having the desired end properties.

Another embodiment of an article according to the invention is illustrated in Figure 2 in the form of a sheet 100 having a pattern of raised portions 102 arranged on at least one surface 101 of the sheet 100. Such articles may be prepared by differential foaming to create raised surfaces 102 with a density different than the density of the surrounding areas 104. Fire retardant substances such as those described herein are interspersed throughout the foam sheet 100. An adhesive layer and associated release liner may be applied to the surface of the sheet opposite surface 101. Such an adhesive layer and release liner are the same as those already described with respect to the article 10 of Figure 1.

The properties of an article may be adjusted by combining one or more polymer compositions with the foam. These additional compositions may take several forms, including layers, stripes, dots, etc. Foamed or non-foamed compositions may be used. A composition may be applied directly to the foam or indirectly, e.g., through, a separate adhesive. In some embodiments, the additional polymer composition is removably bonded to the foam so that the additional composition can subsequently be separated from the foam. Examples of articles featuring combinations of a foam and one or more additional polymer compositions are shown in Figures 3-5. Referring to Figure 3, there is shown an article 200 featuring a plurality of foam stripes 202 arranged in a pattern and combined within a separate polymer layer 204. The density of stripes 202 is different from the density of polymer layer 204 surrounding the stripes. At least one fire retardant substance is interspersed throughout the article 200. An adhesive layer and associated release liner may be applied to one or both of the major surfaces of the sheet 200. Additional layers or structures may also be adhered to the major surfaces of the sheet 200 by an adhesive layer. Such an adhesive layer and release liner are the same as those already described with respect to the article 10 of Figure 1.

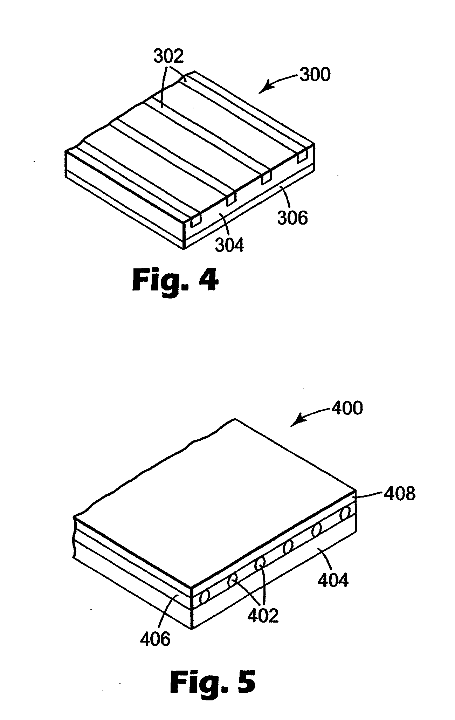

Figure 4 depicts still another embodiment of a sheet article 300 according to the invention in which a plurality of foam stripes 302 are arranged in a pattern and combined within a separate polymer layer 304. Layer 304, in turn, is bonded to yet another polymer layer 306 on its opposite face. The density of stripes 302 is different from the density of layer 304 surrounding the stripes. An adhesive layer and associated release liner may be applied to one or both major surfaces of the sheet 300. Such an adhesive layer and release liner are essentially the same as those already described with respect to the article 10 of Figure 1. Additional layers or structures may also be adhered to the major surfaces of the sheet 300.

Figure 5 depicts yet another foam sheet 400 in which a plurality of foam stripes 402 are embedded within a multilayer structure featuring polymer layers 404, 406, and 408. The density of stripes 402 is different from the density of layers 404, 406, and 408. An adhesive layer and associated release liner may be applied to the surface of the sheet 400 either on the layer 408 or the layer 404 or on both of the layers 408 and layer 404. Such an adhesive layer and release liner are the same as those already described with respect to the article 10 of Figure 1. Additional layers or structures may also be adhered to the major surfaces on layers 404 and 408 of the sheet 400.

In accordance with the principals of the invention, the aforementioned adhesive layer or skin adhesive may be associated with the fire retardant foam sheet by, for example, co-extruding the extrudable microsphere-containing fire retardant composition with one or more extrudable adhesive compositions, as described in greater detail, below. The adhesive compositions are generally formulated and/or selected without fire retardant to provide an adhesive article such as a tape wherein the foam material comprises the substrate or backing for the tape. The adhesive may be applied to a portion of the surface of the foam (e.g., on one of the major surfaces thereof), leaving a portion of the surface (a second major surface) of the foam as a substrate to support additional layers or structures. The skin adhesive can also be laminated to a surface of the fire retardant foam, or the foam can be directly extruded or coated onto the skin adhesive after the skin adhesive has been applied to a release liner.

Other polymer compositions may be co-extruded with the foam such as relatively high modulus polymer compositions for stiffening the foam (semi-crystalline polymers such as polyamides and polyesters), relatively low modulus polymer compositions for increasing the flexibility of the foam (e.g., plasticized polyvinyl chloride), and additional foam compositions.

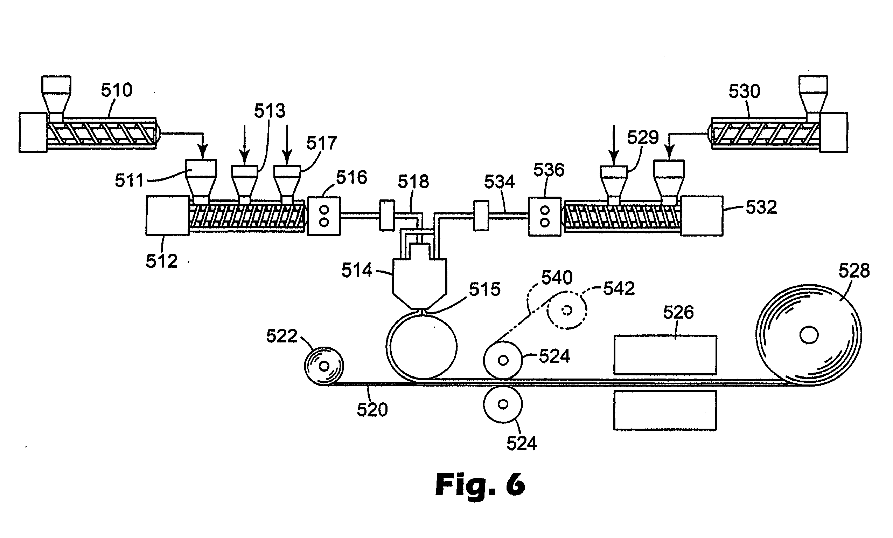

Referring to Figure 6, an extrusion process is shown for preparing a fire retardant foam article according to the invention. According to the process of the invention, polymer resin or adhesive polymer is fed into a first extruder 510 (typically a single screw extruder) to soften and mix the resin into a form suitable for extrusion. The resulting polymer resin will be used to form the polymer matrix of the foam. The polymer resin may be added to the extruder 510 in any convenient form, such as pellets, billets, packages, strands, pouches and ropes.

Next, the resin, fire retardant and other additives (except the expandable microspheres) are fed to a second extruder 512 (e.g., typically a twin screw extruder). The resin may be fed directly from the extruder 510 into second extruder 512 through the first port 511. The fire retardant and other additives can be fed into any port and are typically fed into the second extruder 512 at entrance 513 which is preferably at a point prior to the mixing section of the extruder 512. Once combined, the resin and additives are well mixed in extruder 512. The order of component addition and mixing conditions (e.g., screw speed, screw length, and temperature) are selected to achieve optimum mixing. Generally, mixing is carried out at a temperature below the threshold temperature required to expand the microspheres. However, temperatures higher than the microsphere expansion temperature may be used, in which case the temperature is typically decreased following mixing and prior to the addition of the microspheres to the extruder 512. It will be appreciated that if the polymer resin or adhesive polymer is provided in a form suitable for extrusion, the first extrusion step may be omitted and the resin added directly to extruder 512.

The expandable polymeric microspheres may be added to the second extruder 512, typically in a separate zone at downstream entrance 517 typically immediately prior to a conveying zone of extruder 512. Once added, the fire retardant, expandable polymeric microspheres and the polymer resin are melt-mixed in the conveying zone to form an expandable extrudable composition. The purpose of the melt-mixing step is to prepare an expandable extrudable composition in which the fire retardant, microspheres and other additives, if present, are distributed throughout the molten polymer resin. Typically, the melt-mixing operation uses conveying blocks downstream from entrance 517 to obtain adequate mixing, although kneading elements may be used as well. The temperature, pressure, shear rate, and mixing time employed during melt-mixing are selected to prepare an expandable extrudable composition without causing the microspheres to expand or break. Specific order of addition, zone temperatures, pressures, shear rates, and mixing times are selected based upon the particular chemical compositions being processed, and the selection of these conditions is within the skill of those practicing in the field.

Following melt-mixing, the expandable extrudable composition is metered into extrusion die 514 (e.g., a contact or drop die) through transfer tubing 518 using a gear pump 516. The temperature within die 514 is maintained at substantially the same temperature as the temperature within transfer tubing 518. The temperature within die 514 is at or above the temperature required to cause expansion of the expandable microspheres. While the temperature within the transfer tubing 518 will also be at or above the threshold temperature required to initiate microsphere expansion, the pressure within the transfer tubing 518 is usually high enough to prevent the microspheres from expanding during the time they reside within the tubing 518. The volume within the die 514 is greater than the volume within the tubing 518 so that material flowing from the tubing 518 into the die 514 experiences a pressure drop to a pressure below that within transfer tubing 518. When the expandable extrudable composition enters the die 514, the drop in pressure and the heat within the die 514 will cause the polymeric microspheres to begin expanding. As the microspheres begin to expand, the expandable extrudable composition forms a foam. Most of the microsphere expansion will normally occur before the microspheres exit the die 514. The pressure within the die 514 will continue to decrease as the expandable extrudable composition approaches the exit port 515 of the die 514. The continued decrease of pressure contributes to the further expansion of the microspheres within the die. The flow rate of polymer through the extruder 512 and the die 514 are maintained to keep the pressure in the die cavity sufficiently low to promote the expansion of the expandable microspheres before the expandable polymer composition exits the die 514. The shape of die 514 may be chosen or fashioned to provide a desired shape for the finished foam. Any of a variety of foam shapes may be produced, including continuous or discontinuous sheets. Those skilled in the art will appreciate that chemical blowing agents and the like are also useful in the manufacture of foams according to the invention, either in place of the expandable microspheres or in combination with the microspheres.

If desired, the smoothness of one or both of the foam surfaces can be increased by using nip roll to press the foam against a chill roll after the foam exits die 514, or by using smooth liners on each of the foam surfaces and passing the composite article through a nip. It is also possible to emboss a pattern on one or both surfaces of the foam by contacting the foam with a patterned roll after it exits die S l4 or by using a patterned or microstructured liner such as those described in United States Letters Patent No. 6,197,397 B1 issued to Sher et al.on March 6, 2001.

The extrusion process can also be used to prepare patterned foams, like those shown in Fig. 2, having areas of different densities. For example, downstream of the point at which the article exits the die 514 (Figure 6), the article can be selectively heated, e.g., using a patterned roll or infrared mask, to cause differential or regional expansion of microspheres within designated areas of the article.

In applications requiring adhesive properties, the fire resistant foam core is combined with one or more adhesive layers applied to the outer surfaces of the foam. Figure 6 shows such a co-extrusion process. Adhesive is introduced to the system by adding an adhesive resin/polymer to the extruder 530 (e.g., a single screw extruder) where the resin is softened before it is fed to a second extruder 532 (e.g., typically a twin screw extruder) where the resin is mixed with additives, if any. The adhesive, typically a pressure sensitive adhesive, is processed through the system to provide a resulting foam article that will be useful as a tape, for example. For such applications, the adhesive is formulated without adding additives that diminish the adhesive properties or the tackiness of the adhesive. Although fire retardant materials are normally excluded from the formulation for the adhesive, small amounts of fire retardant may also be included within the adhesive at concentrations that are effective to impart fire retardant properties to the adhesive, while not significantly diminishing the tack of the adhesive. Specifically, it may be desirable to add a small amount of fire retardant to the skin adhesive in very thin (i.e., less than about 0.635 mm (0.025 inches) fire retardant foam articles. The amount of fire retardant added to the skin adhesive is no greater than about 30 weight percent of the total weight of skin adhesive, preferably no greater than about 20 weight percent, more preferably no greater than about 10 weight percent, and most preferably no greater than about 5 weight percent.

An extrudable adhesive composition is metered from the extruder 532 to the appropriate chambers of die S 14 through transfer tubing 534 using a gear pump 536. The adhesive is co-extruded with the foam through an exit port 515 on the die 514 so that the adhesive is applied directly to the outer surface of the expanded foam. Where the foam is provided in a sheet form having two major outer surfaces thereon, the adhesive may be applied to the foam on either or both of the major outer surfaces. Co-extrusion methods for coating an article with adhesive are known to those in the art and need not be further explained here.

If adhesive is applied to both of the major outer foam surfaces, the resulting article is a three-layer article featuring a foam core with a skin adhesive on each of the major surfaces of the foam. For a three layer AB/C construction (adhesive A/foam B/adhesive C), another extruder and related equipment can be employed to permit another skin adhesive to be applied to the other major surface of the foam. In this construction, the major surfaces of the foam may be adhered to any of a variety of surfaces for use in applications where the fire resistant properties of the foam are desired and/or required. Moreover, the absence of fire retardant in the adhesive allows the foam to be adhered to a surface or substrate with the maximum degree of adhesion provided by the particular adhesive used.

Suitable skin adhesives for use in the articles of the present invention include any adhesive that provides acceptable adhesion to a variety of polar and non- polar substrates. Pressure sensitive adhesives are generally acceptable. Suitable pressure sensitive adhesives include those based on acrylic polymers, polyurethanes, thermoplastic elastomers such as those commercially available under the trade designation KRATON (e.g., styrene-isoprene-styrene, styrene-butadiene- styrene and combinations thereof) and other block copolymers, polyolefins such as poly-alpha-olefins and amorphous polyolefins, silicones, rubber based adhesives (including natural rubber, polyisoprene, polyisobutylene, butyl rubber etc.) as well as combinations or blends of these adhesives. The adhesive component may contain tackifiers, plasticizers, rheology modifiers, fillers, fibers, crosslinkers, antioxidants, dyes, colorants, conductive particulates, as well as active components such as an antimicrobial agent.

A group of pressure sensitive adhesives known to be useful in the present invention are, for example, the acrylate copolymers described in U.S. Pat. No. RE 24,906, and particularly a copolymer comprising a weight ratio of from about 90:10 to about 98:2 iso-octyl acrylate: acrylic acid copolymer. Also acceptable is a copolymer comprising a weight ratio of about 90:10 to about 98:2 2-ethylhexyl acrylate : acrylic acid copolymer, and a 65:35 2-ethylhexyl acrylate: isobornyl acrylate copolymer. Useful adhesives are described in U.S. Patent Nos. 5,804,610 and 5,932.298.

The inclusion of antimicrobial agents in the adhesive is also contemplated, such as is described in U.S. Pat. Nos. 4,310,509 and 4,323,557. Blends of acrylic adhesives and rubber based adhesives may also be used such as is described in PCT International Publication Number WO 01/5752.

A release liner 520 may be applied to the adhesive layer or layers disposed on either or both of the major surfaces of the foam. The liner 520 can be dispensed from a feed roll 522. Suitable materials for liner 520 include silicone release liners, release coated polyester films (e.g., polyethylene terephthalate films), and polyolefin films (e.g., polyethylene films). The liner and the foam are then laminated together between nip rollers 524.

Optional release liner 540 can be added to the opposing surface of the foam by positioning optional second feed roll 542 near one of the nip rolls 524. The second release liner 540 may be the same as or different from the release liner 520. Moreover, the second release liner 540 may be provided with a layer of an adhesive coated or applied to one surface of the release liner 540. In this manner, a second adhesive layer (not shown) may be applied to the second major surface of the foam material. The second adhesive layer may be the same as or different from the aforementioned co-extruded adhesive. Typically, the adhesive layers will comprise pressure sensitive adhesives. Release liner 520 may also be provided with a layer of an adhesive coated or applied to one of its surfaces.

Variations to the foregoing process and to the equipment used will be known to those skilled in the art, and the invention is not limited by the described apparatus of Figure 6 herein. Other methods for the manufacture of multilayered foam/adhesive constructs are to be considered within the scope of the invention.

Following lamination, the foam is optionally exposed to radiation from an electron beam source 526 to crosslink the foam for improved cohesive strength. Other sources of radiation (e.g., ion beam, gamma and ultraviolet radiation) may be used as long as the radiation is energetic enough to penetrate the thickness of the foam to initiate and to sufficiently crosslink the foam throughout its thickness. Following exposure, the laminate is rolled up onto a take-up roll 528. For thicker foams, it may be necessary to irradiate the foam through both major surfaces to sufficiently penetrate the material to induce more complete crosslinking. Optionally, the foam could be Gamma irradiated after being made into a roll.

The release liners are typically coated with release agents such as fluorochemicals or silicones. For example, U.S. Pat. No. 4,472,480 describes low surface energy perfluorochemical liners. Suitable release liners include papers, polyolefin films, or polyester films coated with silicone release materials. Polyolefin films may not require release coatings when used with acrylic based pressure sensitive adhesives. Examples of commercially available silicone coated release liners are POLYSLIK™ silicone release papers available from James River Co., H.P. Smith Division (Bedford Park, IL.) and silicone release papers supplied by DCP-Lohja (Dixon, IL.) now known as Loparex, Inc.(Willowbrook, IL). A particular release liner is that known by the designation 1-60BKG-157, a super calendared Kraft paper with a water-based silicone release surface, available from DCP-Lohja. Other types of e-beam stable, contaminant free release liners are also useful in the invention such as those described in pending United States Patent Application Serial No. 09/775,955 assigned to the assignee of this application.

There are several flammabilty tests which can be used to classify the performance of a fire retardant foam article depending upon the application, industry, or government regulations. A foam article can be rated for fire retardancy based on its flammability performance for any of the following properties: burn rate, burn length, self-extinguish time, burning drips, surface flammability, optical smoke generation, and analysis of type and concentration of toxic combustion gases. A fire retardant foam article can be classified as fire retardant by the following tests: UL 94, F.A.R. § 25.853 12 and 60 second Vertical Burn tests, ASTM E162, and ASTM E662, and BSS 7239. There are sometimes different fire retardant ratings for some tests based on flammability performance (i.e. for the UL 94 test, there are V-0, V-1, and V-2 ratings). In the rail transit industry, the maximum flame spread index (Is) is 35 for the Surface Flammability test ASTM E162 and maximum Specific Optical Density (Ds) for ASTM E662 is the following: Flaming and Non-Flaming Modes; Ds(1.5) = 100 maximum, Ds(4.0) = 200 maximum.

Articles comprising the fire retardant foam core tape of the invention and/or the skin adhesive layer(s) applied to the surfaces of the foam can have a high peel adhesion when applied to a panel, while also being cleanly removable from the panel through the incorporation of a stretch release mechanism within the articles. The desired characteristics of a stretch release foam tape according to the invention include (1) foam split strength greater than about 1.76 kN/m ( >10 lbs/inch) ; (2) tensile break strength that is higher than the force needed to remove the tape from a surface so that the tape will not tear or break upon stretch release; (3) other mechanical properties such as relatively low yield stress and good elongation at break (e.g., greater than 150 %); and (4) exhibit significant strain hardening behavior (at least 150 % higher tensile strength than the yield stress to stretch release it) or exhibit greater than 50% elastic recovery.

To provide stretch release properties and to further reinforce the articles of the invention, the fire retardant foam, the adhesive or both the foam and the adhesive will include reinforcing materials comprising viscoelastic or elastic microfibers formed *in situ* during the manufacturing process described herein. It has been found that suitable microfibers include those formulated according to the teachings of pending United States Patent Application Serial No. 09/764,478. In specific embodiments, the reinforcing microfibers are viscoelastic and comprise semi-crystalline polymer (e.g., having both amorphous and crystalline domains). Specific embodiments of semi-crystalline polymers include polycaprolactone (PCL), polybutene (PB), copolymers derived from ethylene and at least one other alpha-olefin monomer (e.g. polyolefin copolymers and terpolymers), ultra low density polyethylene (e.g. having a density below 0.915 grams/cubic centimeter, such as ATTANE 4201, 4202, 4203, 4301 and 4404 commercially available from Dow Chemical Co. or), linear low density polyethylene (e.g. having a density between 0.915 and 0.94 grams/cubic centimeter, such as LL-3003, ECD-125, 377D60, 369G09, 363C32, 361C33, 357C32, 350D65, 350D64, 350D60, LL-3013, and LL-3001 commercially available from ExxonMobil Corp.), the DOWLEX series elastomers commercially available from Dow Chemical, metallocene polyolefin (e.g., EXACT 3040, 3024, 3139 commercially available from Exxon Mobil Corp.), and polyolefin plastomers (e.g., the AFFINITY series commercially available from Dow Chemical), metallocene copolymers (e.g., the ENGAGE series commercially available from Dupont-Dow Elastomers), and combinations of the foregoing materials. Examples of suitable reinforcing microfibers that are elastic include thermoplastic elastomers such as for example those comprising polyurethane, synthetic block copolymers, and combinations of the foregoing materials.

The reinforcing microfiber materials have a measurable yield strength. In certain embodiments, the yield strength of the reinforcing material is less than about 20 MPa. The tensile break strength of the reinforcing material is typically at least about 150% of its yield strength. In specific embodiments, the tensile strength (according to ASTM D 882-97 at a crosshead speed of 12 inches/minute (30 centimeters/minute)) of the reinforcing material is higher than the tensile strength of the adhesive and/or the expanded foam. The reinforcing microfiber material should have a melting point above the use temperature of the adhesive/foam composition and should have a melting point above the storage temperature of the adhesive composition or any article manufactured with the adhesive composition. Both the use temperature and the storage temperature should not exceed the temperature at which either the foam or the adhesive decomposes. In certain embodiments, the reinforcing material has a melting point of at least 70 °C as determined by differential scanning calorimetry ("DSC") at a scanning rate of 10 °C/minute, for example.

It is desirable for the reinforcing microfiber material to have a melt viscosity (as determined with a capillary viscometer) similar to the melt viscosity of the adhesive or the foam, as applicable, at the processing temperature of the method of this invention. The reinforcing microfiber material is preferably immiscible in (i.e. remains in a separate phase), but is compatible with, the material to which it is added during the manufacturing process (e.g., the polymer foam and/or the adhesive ingredients) so that the microfiber material can be substantially uniformly dispersed (i.e. distributed) in the adhesive or the foam. The reinforcing microfibers will form *in situ* in the machine direction of the foam or tape. In specific embodiments, during mixing, the microfiber forming resin is dispersed into the adhesive or foam formulations by a twin screw extruder as substantially spherical particles having an average diameter less than about 20 micrometers. Substantially continuous microfibers form during extrusion through the die. In certain embodiments, the reinforcing microfiber material has an average diameter less than about 10 micrometers.

Most typically, the reinforcing microfiber material exists as substantially continuous fibers in the adhesive and/or in the fire retardant foam composition. In one aspect of the invention, the fibers are unbroken for at least about 0.5 centimeters in the machine direction of the adhesive or foam , typically at least about 2 centimeters. In other embodiments, the substantially continuous fibers are continuous for at least about 5 centimeters and typically at least about 8 centimeters. According to another aspect of the invention, the substantially continuous fibers generally have a maximum diameter of about 0.05 to about 5 micrometers, preferably from about 0.1 to about 1 micrometers. According to another aspect of the invention, the aspect ratio (i.e. the ratio of the length to the diameter) of the substantially continuous fibers is greater than about 1000.

It has been found that a suitable chemistry useful in the present invention comprises microfibers of certain copolymers and terpolymers of polyalkylene resins including copolymers of polyoctene-ethylene and/or polyhexene-ethylene as well as polybutene-co-ethylene and the like. The microfibers will strain harden during the removal (stretch release) process so that their inclusion in the foam and/or adhesive provides a final material that will stretch and release from a substrate without breakage due to the strain hardening of the microfibers. In general, and without limitation, $C_3$ - $C_{10}$ copolymers with ethylene are suitable for use in the manufacture of the reinforcing microfibers. The foregoing polyoctene-ethylene and/or polyhexene-ethylene copolymers are compatible with, but immiscible in, many polymers such as for example, acrylic and rubber/resin based block copolymer adhesives, and can be blended in the twin screw extruder, as described herein, to generate the microfibers *in situ.* In other words, the polymer of the microfiber is compounded with the polymer foam and foaming agent, and a continuous microfiber is generated *in-situ* by shear flow while a unidirectional microfiber reinforced composite core is being foamed.

In those embodiments where the reinforcing microfibers are included within the articles of the invention, the manufacturing process temperatures are typically chosen so that the temperatures within each of the temperature zones is between the melting point (low limit) of fiber polymer resin and the activation temperature (high limit) of a foaming agent (e.g., the polymer microspheres, chemical foaming agent, etc.). Moreover, the temperature of the die 514 (Figure 6) is generally no greater than about 60°C over the melting point of the polymer of the microfiber so that the microfiber can effectively consolidate by crystallizing upon cooling.

The melting point of polymer used in the manufacture of the microfibers herein should be lower than the activation temperature of the foaming agent used, so that the foaming agent, fiber polymer and the foam matrix material can be blended homogeneously without pre-expanding the foaming agent in the mixing zone. The melting point of the polymer resin used in the manufacture of the microfibers is generally at least 20°C lower than the activation temperature of foaming agent. Better results might be realized if the melting point of the polymer resin used in the manufacture of the microfibers is at least 30°C lower or 40°C lower than the activation temperature of the foaming agent.

The foregoing co-extrusion process can be conducted so that a two-layer article is produced, or to produce articles having three or more layers (e.g., 10-100 layers or more) by equipping die 514 with an appropriate feed block, or by using a multi-vaned or a multi-manifold die. Multilayered foam articles can also be prepared by laminating additional layers (e.g., polymer layers, metals, metal foils, scrims, paper, cloth, adhesives coated on a release liner, etc.) to the foam, or to any of the co-extruded polymer layers after the article exits die 514. Other techniques which can be used include pattern coating. The foam layer(s) in the articles of the invention can be thick, i.e., 0.25 mm (0.010 inches) or larger; or thin i.e., 0.025 mm (0.010 inches) or less.

The fire retardant foam articles of the invention may be used in a variety of applications, including aerospace, automotive, electronic, and medical applications. The properties of the articles may be tailored to meet the demands of the desired applications. Specific examples of applications include adhesive tapes or sheets, vibration damping articles, medical dressings, tape backings, retroreflective sheet backings, anti-fatigue mats, abrasive article backings, gaskets, spacers, and sealants.

The features of the embodiments of the invention are further illustrated in the following non-limiting examples.

## EXAMPLES

In the test methods and examples below, the sample dimensions (typically the length) are approximate except for the width wherein the width was measured to the accuracy of the cutting tool.

### Test Methods

### Flammability Test Method 1 (TM1)

This test method is based on Underwriters Laboratories (UL) 20 mm Vertical Burning Test 94 (UL-94) with the following modifications to the test procedure and/or the components used in the test method:

| UL-94 | TM1 |
|---|---|
| methane gas | propane gas |
| 12.7 mm (0.5 inch) cone | 7.94 - 9.53 mm (0.3125 -0.375 inch) diameter by 76.2 - 127 mm (3-5 inch) long barrel |
| 100% blue flame | < 100 % blue flame |
| flame length | 19 mm (0.75 inch) flame length |
| sample size | 12.7 mm wide x 127 mm long (0.5 inch x 5 inch) sample size |

Procedure:

A sample was attached by one end to a ring stand by an alligator clamp and a cotton cloth indicator was placed directly beneath the sample. The release liner, when present, was removed from the sample to be tested and the sample thickness was measured and recorded. The flame from a propane fueled lighter was applied to the middle point of the edge of the free or unattached end of the sample with the propane lighter barrel about 10 mm below the edge of the unattached end of the sample. The lighter and flame were maintained at that position for 10 seconds, moving the lighter as was necessary to respond to changes in the length or the position of the sample. The angle of the lighter was adjusted to prevent sample material from dripping onto the barrel of the lighter. The flame was removed after 10 seconds and the measurement of afterflame time was started. The duration of the afterflame was noted as t1.

At the cessation of the afterglow, the sample was immediately exposed to flame for a second time and the flame was maintained for 10 minutes at a distance of 10 mm from the remaining portion of the sample. After 10 seconds, the flame was removed and the measurement of afterflame time and the afterglow time was started. The duration of the afterflame was noted as t2. The duration of the afterglow was noted as t3.

The flammability rating criteria used in TM1 herein was as described in UL-94, as follows:

| Condition | Flammability Rating Criteria | | |
|---|---|---|---|
| | V-0 | V-1 | V-2 |
| Afterflame time t1 for each specimen | less than or equal to 10 seconds | less than or equal to 30 seconds | less than or equal to 30 seconds |
| Afterflame time t2 for each specimen | less than or equal to 10 seconds | less than or equal to 30 seconds | less than or equal to 30 seconds |
| Afterflame time total U+t2, for all specimens | less than or equal to 50 seconds | less than or equal to 250 seconds | less than or equal to 250 seconds |
| Afterflame time + afterglow time t2+t3 for each specimen | less than or equal to 30 seconds | less than or equal to 60 seconds | less than or equal to 60 seconds |
| Travel of afterflame or afterglow up to holding clamp for any specimen | No | No | No |
| Cotton indicator ignited by flaming particles or drops | No | No | Yes |

**Flammability Test Method 2 (TM2)**

This test method is based on the criteria and procedures for showing compliance with F.A.R. 25.853 (July 1990) but differs from F.A.R. § 25.853 (July 1990) in that the specimens (samples) were conditioned at 50% $\pm$10 % relative humidity for a minimum of 24 hours instead of the specified 50% +5%.

Samples were conditioned to 21.1°C. $\pm$2.8° C. (70° $\pm$5° F.) and at 50% $\pm$10 % relative humidity for a minimum of 24 hours. Specimens were mounted in a U-shaped metal frame so that the two longitudinal edges and one transverse (narrow) edge were held securely in a vertical orientation, unsupported by and unattached to a substrate. The exposed area of the specimen was at least 50.8 mm (two inches) wide and about 304.8 mm (12 inches) long.

The samples were exposed to the flame from a Bunsen burner. The lower edge of the sample was about 19.1 mm (3/4 inch) above the top edge of the burner. The flame was applied to the center line of the lower edge of the sample for 12 seconds or for 60 seconds as specified in the Examples. The flame time, burn length, and flaming time of dripping, if any, was recorded. The bum length was measured as the distance from the edge of the sample exposed to the flame to a point on the sample where burn damage directly attributable to flame impingement was no longer apparent. Areas on the sample indicating partial or complete consumption, charring, or embrittlement were included in the measurement of burn length. Areas showing soot, staining, warping of the surface, or discoloration were not included in the burn length, nor were areas where material appeared to have shrunk or melted due to heat.

F.A.R. § 25.853 (July 1990) subparagraphs (a)(1)(i) 60 second flame exposure require that the average bum length not exceed 152.4 mm (six inches), the average flame time after removal of the flame source not exceed 15 seconds, and drips not continue to flame for more than an average of 3 seconds after falling. F.A.R. § 25.853 (July 1990) subparagraphs (a)(1)(ii) 12 second flame exposure require the average burn length not exceed 203 mm (8 inches), the average flame time after removal of the flame source not exceed 15 seconds, and drips not continue to flame for more than an average of 5 seconds after falling.

**90 Degree Peel Adhesion**

A 25.4 mm (one inch) wide by about 152 mm (6 inches) long sample was cut from the article to be tested and laminated to an about 165 mm (6.5 inches) long by about 286 mm (1.125 inches) wide by 0.127 mm (0.005 inches) thick anodized aluminum foil by rolling down the article onto the anodized side of the aluminum foil, taking care not to trap air bubbles between the foil and the article. The foil/article laminate was then positioned on a clean, dry, 51 mm (two inches) wide by about 127 mm (5 inches) long, substrate panel of glass or stainless steel, as specified in the Examples below, so that the laminate was centered on the panel with a portion of the laminate extending off the panel to serve as a tab. The laminate was rolled down onto the panel using a 2 kg (4.5 lb) hard rubber roller, with two passes in each direction. Care was taken not to trap bubbles between the panel and the laminate. The sample thus prepared was allowed to dwell at room temperature (about 22°C) for about 72 hours. Then the sample was tested at room temperature (about 22°C) for 90 Degree Peel Adhesion according to the Pressure Sensitive Tape Council test method PSTC-5 "Quick Stick of Pressure Sensitive Tapes" at crosshead speed of 30 cm/minute (12 inches/minute) using an INSTRON tensile tester. That is, the peel value obtained from the first 25.4 mm (one inch) length of peel was ignored. The peel value of the next 89 mm (3.5 inches) or "peel area" was recorded. The values reported were the integrated peel adhesion values. Failure mode was also noted.

**Foam Split Strength Test**

Foam Split Strength was determined using the procedure outlined for 90 Degree Peel Adhesion except that the substrate panel used was 1.52 mm (0.060 inch) thick anodized aluminum. The values reported were the integrated peel adhesion values. Failure mode was also noted.

**Static Shear Strength**

A 2.54 cm (one inch) wide by about 15.2 cm (6 inches) long sample was cut from the article to be tested and laminated to a sheet of anodized aluminum foil (about 16.5 cm (6.5 inches) long by 2.86 cm (1.125 inches) wide by 0.0127 cm (0.005 inches) thick) by rolling down the article onto the anodized side of the aluminum foil, taking care not to trap air bubbles between the foil and the article. The foil/article laminate was then cut in half to give two about 2.54 cm x about 7.62 cm (1 inch x 3 inches) test specimens. The liner was removed from a test specimen and then positioned on a clean, dry, 5.1 cm (two inches) wide by 12.7 cm (5 inches) long, stainless steel substrate panel so that the laminate was centered on one end of the panel so that 2.54 cm (1 inch) length was adhered (i.e. 6.25 sq. cm (1 sq. inch) bond area) and the 5.1 cm (2 inches) portion of the laminate extended off the panel to serve as a tab. The laminate was rolled down onto the panel using a 2 kg (4.5 lb) hard rubber roller, with two passes in each direction. Care was taken not to trap bubbles between the panel and the laminate. The 5.1 cm (2 inches) tab was then folded around a triangular clip and stapled so that a weight could be attached to the test specimen. The sample thus prepared was allowed to dwell at room temperatures and approximately 50 % relative humidity for approximately 72 hours. The test specimen was then placed in a Static Shear standard fixture having a 2 degree angle back slant in an forced air oven set at 70°C (158°F). The test specimen was then given a 10 minute warm up period before attaching a 1000 gram weight. The test was run until the test specimen failed or 10,000 minutes elapsed. Failure time and failure mode were recorded. Where the test specimen did not fail, the amount of slippage was measured and recorded.

**Tensile Break Strength & Elongation**

A silicone release liner was applied to the exposed surface of the article which already had a liner on one side. A 2.54 cm (one inch) wide by about 12.7 cm (5 inches) long sample was cut in the machine direction from the article to be tested to form the test specimen. One release liner was removed and a 2.54 cm (1 inch) length was measured and marked in the center of test specimen to provide the initial gap distance. A 2.54 cm (1 inch) wide by about 7.62 cm (3 inch) piece of masking tape was placed across the foam article by positioning the tape edge on both marks so that the 2.54 cm (1 inch) long section that was marked off did not have tape covering it. The other liner was then removed, and masking tape was wrapped completely around the article. Care was taken to keep the masking tape aligned with the marks on the article. The tape was used to prevent the sample from adhering to the INSTRON jaws and prevent the sample from breaking at the point where it was clamped by the jaws. The INSTRON was set up with the following conditions:

Jaw Gap: 2.54 cm (1 inch)
Crosshead Speed: 30.48 cm/minute (12 inches/minute)

The test specimen was then positioned in the INSTRON jaws so that the jaws lined up with the edge of the masking tape. The sample was tested at a crosshead speed of 30.5 cm/minute (12 inches/minute) until the sample broke. The tensile break strength was recorded in pounds (and later converted to kilograms) and elongation distance were recorded. The percent elongation was determined by dividing the elongation distance by the initial gap distance times 100. Three specimens were tested and averaged to provide the Tensile Break Strength and Percent Elongation.

**Hardness**

The thickness of an about 5.1 cm (two inches) by 2.54 cm (one inch) article sample was measured and recorded. The sample was then laminated to a clean, dry glass panel taking care to avoid trapping air bubbles between the sample and the glass. Additional pieces of article sample were laminated to the first article until a total thickness of at least 0.34 cm (0.135 inches) was achieved. Using a Shore A Hardness Tester (Model CV Stand and Durometer Type A ASTM D2240 Gauge available from Shore Instrument Mfg. Co. Inc., Freeport, NY), the initial hardness of the article was measured three times and the maximum hardness values obtained were averaged.

**Article Density**

A 2.54 cm (one inch) wide by 7.6 cm (3 inches) long sample was cut from the article to be tested. The thickness of the article with the liner in place was measured in three places along its length and the number is averaged. The thickness of liner was subtracted from the sum of the thickness of the article + the thickness of the liner to give the sample thickness. The liner was removed and the sample was then weighed on a balance with an accuracy of at least 0.01 grams. The density was then calculated as

$$\text{Density (g/cc)} = \text{weight}/(3 \times \text{sample thickness (inches)} \times 16.39)$$

**Dynamic Shear Strength**

This test method measures the dynamic shear strength of the foam. A 25.4 mm x 25.4 mm (1 inch x 1 inch) piece of foam tape was adhered to 25.4 mm wide by 50.8 mm long by 1.5 mm thick (1 inch x 2 inches x 0.06 inch) anodized aluminum test panels and allowed to dwell for approximately 1 to 3 days at room temperature. The samples were tested according to ASTM D-1002 with 6.45 cm$^2$ (1 square inch) of overlap. The samples were tested on an INSTRON tensile tester at a crosshead speed of 12.7 mm/minute (0.5 inches/minute). The maximum dynamic shear force in pounds per square inch (lbs/in 2 and converted to megapascals (MPa) and failure mode were recorded for each sample. Two or more samples were tested and the results were averaged.

**T-Block Dynamic Tensile Strength**

This test method measures the dynamic tensile strength of the foam. A 25.4 mm x 25.4 mm (1 inch x 1 inch) piece offoam tape was adhered to aluminum T-Blocks which were primed with 3M™ Scotch-Mount™ 4298 UV Adhesion Promoter and allowed to dwell for 1 to 3 days at room temperature. The samples were tested according to ASTM D-897 with 6.45 cm$^2$ (1square inch) of overlap. The samples were tested on an INSTRON tensile tester at a crosshead speed of 50.8 mm/minute (2.0 inches/minute). The maximum dynamic tensile strength in pounds per square inch (lbs/in$^2$) and converted to megapascals (MPa) and failure mode were recorded for each sample. Two or more samples were tested and the results were averaged.

**Material Used in the Examples**

Certain commercially available materials were used in the Examples of the invention. These materials are listed below and are often referred to in the Examples with reference to their trade designations.

| Trade Designation | Description | Source |
|---|---|---|
| IRGACURE 651 | 2.2-dimethoxy-2-phenylacetophenone | Ciba Specialty Chemicals Corp, Tarrytown, NY |
| EXOLIT AP 750 | intumescent flame-retardant system based on ammonium polyphosphate | Clariant Corporation, Charlotte, NC |
| EXOLIT AP 752 | intumescent flame-retardant system based on ammonium polyphosphate | Clariant Corporation, Charlotte, NC |
| FR 370 | tris(tribromoneopentyl) phosphate | Dead Sea Bromine Group, Beer Shiva, Israel |
| EXPANTROL | sodium silicate compound with zinc borate | 3M Company, SL Paul, MN |
| FYREX | monoammonium and diammonium phosphate in powder form | AKZO Nobel Functional Chemicals LLC, Gallipolis Ferry, WV |
| GRAFGUARD | expandable graphite flakes | Graftech, Inc., Lakewood, OH |

(continued)

| Trade Designation | Description | Source |
|---|---|---|
| EXOLIT IFR 23 | flame-retardant system based on ammonium polyphosphate | Clariant Corporation, Charlotte, NC |
| FLAMESTAB NOR 116 | fire retardant synergist | Ciba Specialty Chemicals Corp, Tarrytown, NY |
| F100D | expandable polymeric microspheres having a shell composition containing acrylonitrile and methacrylonitrite | Pierce Stevens, Buffalo, NY |

**Example 1**

In this example, a three layer article having a pressure sensitive skin adhesive layer on both outer surfaces of a polymer foam material containing fire retardants was prepared and then tested for flammability and adhesive performance. This example included a blend of an intumescent fire retardant based on ammonium polyphosphate and a small amount of a brominated phosphate fire retardant.

Preparation of Packaged Pressure Sensitive Adhesive A

A pressure-sensitive adhesive composition was prepared by mixing 90 parts of 2-ethylhexyl acrylate (2-EHA), 10 parts of acrylic acid (AA), 0.15 parts IRGACURE 651 monomer, and 0.03 parts isooctyl thioglycolate (IOTG). The composition was placed into packages measuring approximately 100 mm by 50 mm by 5 mm thick as described in U.S. Pat. No.5,804,610 (Hamer et al). The packaging film was 0.0635 mm (0.0025 inches) thick VA-24 film (a heat sealable, ethylene vinyl acetate copolymer film having 6% vinyl acetate, available from CT Film of Dallas, TX). The packages were immersed in a water bath and at the same time exposed to ultraviolet radiation at an intensity of 3.5 milliwatts per square centimeter and a total energy of 1627 milliJoules per square centimeter as measured by NIST units to form a Packaged Pressure Sensitive Adhesive A.

Preparation of Precompounded Adhesive A

A skin adhesive was precompounded from Packaged Pressure Sensitive Adhesive A as follows:
The Packaged Pressure Sensitive Adhesive A was fed to the second feed port of the twin screw extruder through a first 51 mm single screw extruder (Bonnot). The Bonnot zone temperatures were set at the following: Zone 1= 149°C (300°F), Zone 2= 163°C (325°F), and Zone 3=177°C (350°F). The pump and heated hose were set at 177°C (350°F). A 30 mm co-rotating twin screw extruder (Werner Pfleider) operating at a screw speed of 300 rpm was used. The temperature for the six zones in the twin screw extruder was set at Zone 1= 163°C (325°F), and Zones 2 through 6 =121 °C (350°F). The adhesive was delivered into a silicone coated paper box though a heated hose set at121°C (350°F). The skin adhesive was identified as "Precompounded Adhesive A."

Preparation of Fire Retardant Three Laver Article

Two fire retardants (84 parts by weight EXOLIT AP 750, and 16 parts by weight FR 370 per 100 parts by weight of packaged adhesive "A") were added as dry solids to the first feed port of a 30 mm co-rotating twin screw extruder with three additive ports (Werner Pfleider) operating at a screw speed of 300 rpm with a total flow rate of flame retardant and packaged pressure sensitive adhesive, as prepared above, of about 6.36 kilograms/hour (14 pounds/hour). The temperature for the six zones in the twin screw extruder was set at zone 1= 38°C (100°F), zone 2= 99°C (210°F), zone 3= 104.5°C (220°F), zone 4= 110°C (230°F), zone 5= 115.5°C (240°F), and zone 6= 121°C (250°F). The temperature in the extruder adapter was 149°C (300°F) and the flexible hose at the exit end of the extruder were all set at 182°C (360°F) The flow rate was controlled with a Zenith gear pump.
100 parts by weight of the "Packaged Pressure Sensitive Adhesive A" were fed to the second feed port of the twin screw extruder through a first 51 mm single screw extruder (Bonnot). The temperature for all zones was set at 176°C (350°F). F100D microspheres at a concentration of 1.5 parts by weight per 100 parts by weight of packaged adhesive were added downstream to the third feed port (about three-fourths of the way down the extruder barrel). The extrudate was pumped via the heated hose to the center/middle layer of an about 203.2 mm (8 inches) wide CLOEREN multilayer feedblock and die (available from The Cloeren Company, Orange, TX) with a gap of about 1 mm (0.040 inches).

Simultaneously, Precompounded Adhesive A was fed to the each of the outer layers of the three layer drop die from a second S 1 mm single screw extruder (Bonnot) and coextruded with the extrudate above. The Bonnot zone temperatures were all set at 149°C (300°F). The pump and heated hose were set at 163°C (325°F). The thickness of one adhesive layer (Side 1) was about 0.084 mm (0.0033 inches) and the thickness of the other adhesive layer (Side 2) was about 0.086 mm (0.0034 inches).

The resulting three layer sheet had a thickness of about 0.99 mm (0.039 inches). The extruded sheet was cast onto a chill roll that was set at 7.2°C (45.5°F), cooled to about 25°C, and then transferred onto a 0.127 mm thick polyethylene release liner prepared according to Examples 10a and 10b of copending U.S. patent application serial no. 09/775955 "Adhesive Article and Method of Preparing." The release liner was applied to the adhesive layer of Side 1. The resulting article was wound into a roll for subsequent crosslinking.

Two approximately one meter (39 inches) long pieces were cut from the above sample roll. A 0.051 mm (0.002 inch) thick two sided, silicone-coated polyester liner, having different release materials (identified as 5035 and 7200) on each side, available from DCP-LOHJA Inc. Willowbrook, IL as 2-2PESTR(P2)-5035 & 7200, was carefully laminated to the uncovered adhesive layer on Side 2 of each piece so that the 7200 silicone coated side contacting the adhesive layer. The extruded sheet piece with liners on both sides was then passed through the electron beam (e-beam) processing unit (ESI Electro Curtain) operating at an accelerating voltage of 300 keV and at a speed of 6.1 meters per minute, once on each side. One piece received a measured e-beam dose of 6 megaRads on each side and the other piece received a measured e-beam dose of 8 megaRads on each side. The resultant article was then tested for flammability, physical properties, and adhesive performance properties. The article that received 8 megaRads dose was only tested for Static Shear. Results are given in Table I.

**Table 1**

| Test | Test Results |
| --- | --- |
| Flammability TM 1 | Pass V-0 rating |
| Flammability TM 2, 12 sec. vertical bum | Pass |
| Flammability TM 2, 60 sec. vertical bum | Fail |
| Foam Split Strength | 6.39 kN/m (36.5 lb/in) |
| 90 Degree Peel Adhesion, glass | 3.55 kN/m (20.3 ;b/in) |
| 90 Degree Peel Adhesion, stainless steel | 4.11 kN/m (23.5 lb/in) |
| Static Shear, (6 MRads) | 600 minutes |
| Static Shear, (8 MRads) | 10,000+ minutes |
| Tensile Break Strength & Elongation | 1.21 kN/m (6.9 lb/in) peak, 533% elongation |
| Hardness, Shore A | 50 |
| Density | 0.96 g/cc (59.9 1b/cu. ft.) |

This example generated small amounts of smoke during flammability testing. However, the amount of smoke was less than would have been expected for a composition containing a brominated fire retardant. For the same amount of fire retardant, the flammability performance of the combination of intumescent fire retardant and brominated phosphate was better than the performance of the intumescent fire retardant alone. Use of only a small amount of brominated phosphorous provides an additional advantage of low toxic gas generation which is important for passing some flammability specifications in certain industries such as the aerospace industry.

It is believed that the flammability performance of the constructions of Example 1 was related, in part, to the thickness of the outer adhesive layer. A higher concentration (i.e., greater than 50 wt. %) of fire retardants in the foam layer and thinner skin adhesive layers will improve the flame retardant properties of these samples.

## Example 2

A three layer article having a pressure sensitive adhesive layer on both outer surfaces of a fire retardant containing polymer foam material were prepared as in Example I except that the precompounded adhesive used for the outer skin layers was a blend of acrylic adhesive and rubber based adhesive as described in Hot Melt Composition K of WO 01/57152. The thickness of one adhesive layer (Side 1) was about 0.066 mm (0.0026 inches) and the thickness of the other adhesive layer (Side 2) was about 0.064 mm (0.0025 inches). The overall article thickness was about 0.90 mm (0.0354 inches). The article was tested for flammability according to TM 1. The article passed the V-0 rating.

### Reference Example 3

Six samples of three layer articles having a pressure sensitive adhesive layer on both outer surfaces of a fire retardant containing polymer foam material were prepared as in Example I except that only EXOLIT AP 750 was used as the fire retardant, and the amount of fire retardant and the amount of F100D expandable polymeric microspheres were varied. The fire retardant addition rate was adjusted to achieve the desired fire retardant amount in the polymer foam material based on a pressure sensitive adhesive feed rate of 4.55 kg/hour (10 lb/hour).

The extruded sheet was then crosslinked according to the procedure of Example 1, using an electron beam processing unit (ESI Electro Curtain) operating at an accelerating voltage of 300 keV and at a speed of 6.1 meters per minute. The measured e-beam dose was 8 megaRads.

The resultant article was then tested for flammability according to TM 1.

The fire retardant used, the amount of fire retardant, the amount of F100D microspheres, the thickness of the resultant article, and the flammability results are given in Table 2.

**Table 2**

| Wt. % AP 750 based on wt. polymer foam material | Wt.%F100D based on wt. of polymer foam material | Density of polymer foam material, g/cc | Thickness of PSA Layer on Side 1, mm (inches) | Thickness of PSA Layer on Side 2, mm (inches) | Article Thickness, mm (inches) | Flammability TM I Results |
|---|---|---|---|---|---|---|
| 45 | 0.75 | 0.750 | 0.074 (0.0029) | 0.058 (0.0023) | 1.32 (0.052) | Fail |
| 45 | 1.25 | 0.723 | 0.081 (0.0032) | 0.058 (0.0023) | 1.35 (0.054) | Fail |
| 50 | 0.75 | 0.796 | 0.071 (0.0028) | 0.051 (0.0020) | 1.50 (0.059) | Fail |
| 50 | 1.25 | 0.751 | 0.074 (0.0029) | 0.041 (0.0016) | 1.45 (0.057) | Pass V-2 rating |
| 55 | 0.75 | 0.822 | 0.046 (0.0018) | 0.033 (0.0013) | 1.19 (0.047) | Pass V-1 rating |
| 55 | 1.25 | 0.751 | 0.068 (0.0027) | 0.035 (0.0014) | 1.37 (0.054) | Pass V-1 rating |

### Example 4

Nine samples of three layer articles having a pressure sensitive adhesive layer on both outer surfaces of a fire retardant containing polymer foam material were prepared as in Example 2.

Preparation of Packaged Pressure Sensitive Adhesive B

A pressure-sensitive adhesive composition was prepared according to the procedure in Example 1 for "Packaged Pressure Sensitive Adhesive A", except that 95 parts 2-EHA, 5 parts AA, and 0.01 parts IOTG were used in place of 90 parts 2-EHA, 10 parts AA, and 0.03 parts IOTG to form "Packaged Pressure Sensitive Adhesive B".

Preparation of Packaged Pressure Sensitive Adhesive C

A packaged pressure sensitive adhesive "C", was prepared according to the procedure in Example 1 for packaged adhesive "A", except that isooctyl acrylate (IOA) was used in place of 2-EHA to form "Packaged Pressure Sensitive Adhesive C".

Preparation of Precompounded Adhesive C

"Packaged Pressure Sensitive Adhesive C" was precompounded in a twin screw extruder by the same procedure used to prepare "Precompounded Adhesive A" to give "Precompounded Adhesive C".

Preparation of Fire Retardant Three Layer Article

Fire retardant(s) was added as dry solids to the first feed port of a 30 mm co-rotating twin screw extruder with three additive ports (Werner Pfleider) operating at a screw speed of 200 rpm with a flow rate of about 2.3 kilograms/hour (5 pounds/hour). For Sample Nos. 4-1 to 4-7, 4-9, and 4-12, 100 parts by weight of fire retardant(s) was added. For Sample No. 4-8, 75 parts by weight of fire retardant(s) was added. For Sample No. 4-10, 82 parts by weight of fire retardant(s) was added. For Sample Nos. 4-11, 4-13, and 4-14, 122 parts by weight of fire retardant(s) was added. The temperature for the six zones in the twin screw extruder was set at Zone 1= 38°C (100°F), Zone 2= 99°C (210°F), Zone 3= 104.5°C (220°F), Zone 4= 110°C (230°F), Zone 5= 115.5°C (240°F), and Zone 6= 121 °C (250°F). The temperatures in the extruder and the flexible hose at the exit end of the extruder were all set at 93.3°C. The flow rate was controlled with a Zenith gear pump.

100 parts by weight of the "Packaged Pressure Sensitive Adhesive B" prepared above was fed to the second feed port of the twin screw extruder through a first 51 mm single screw extruder (Bonnot) at a rate of 2.3 kg/hr (5 lbs/hr).

1.5 parts by weight, per 100 parts by weight of "Packaged Pressure Sensitive Adhesive B", of FI OOD were added downstream to the third feed port (located about three-fourths of the way down the extruder barrel). The hose and the die temperatures were set at 182°C (360°F). The extrudate was pumped via the heated hose to the center/middle layer of an about 203.2 mm (8 inches) wide CLOEREN multilayer feedblock and die (available from The Cloeren Company, Orange, TX) with a gap of about 1 mm (0.040 inches).

Simultaneously, "Precompounded Adhesive C" was fed to the each of the outer layers of the three layer drop die from a second 51 mm single screw extruder (Bonnot) and coextruded with the extrudate above.

The extruded sheet was cast onto a chill roll that was set at 7.2°C, cooled to about 25°C, and then transferred onto a 0.127 mm thick polyethylene release liner, as described in Example 1 and wound into a roll for subsequent crosslinking. An approximately one meter (39 inches) long piece was cut from the sample roll. A 0.051 mm (0.002 inch) thick silicone-coated polyester liner, as described in Example 1, was carefully laminated to the uncovered side of the extruded sheet. The extruded sheet with liners on both sides was then passed through an e-beam, once on each side. The measured e-beam dose was 8 megaRads per side. The resultant article was then tested for flammability according to the TM I and TM 2.

The fire retardants used, the amount of fire retardant, and the flammability results are given in Table 3.

**Table 3**

| Sample No. | Fire Retardant | Amt. Fire Retardant, (wt% polymer foam material) | Avg. Adhesive Layer Thickness, Side1/Side2 mm (inches) | Article Thickness mm (inches) | Polymer foam material appearance | Flammability | | |
|---|---|---|---|---|---|---|---|---|
| | | | | | | TM 1 | TM 2, 12 sec. burn | TM 2, 60 see. burn |
| 4-1 (*) | EXOLIT IFR 23 | 50 | 0.076/0.076 (0.003/0.003) | 0.864 (0.034) | some bubbles | Pass V-0 rating | Pass | Fail |
| 4-2(*) | EXOLIT AP 752 | 50 | 0.025/<0.025 (0.001/<0.001) | 0.889 (0.035) | some bubbles | Fail | NT | NT |
| 4-3(*) | EXOLIT IFR 23 | 42 | 0.076/0.051 (0.003/0.002) | 1.19 (0.047) | many holes | Pass V-0 rating | Pass | Fail |
| | FR 370 | 8 | | | | | | |
| 4-4 | EXOLIT AP 750 | 42 | 0.076/0.076 (0.003/0.003) | 0.711 (0.028) | no bubble, smooth surface | Pass V-0 rating | Pass | Fail |
| | FR 370 | 8 | | | | | | |
| 4-5(*) | FYREX | 50 | NT(a) | NT | NT | NT | NT | NT |

(continued)

| Sample No. | Fire Retardant | Amt. Fire Retardant, (wt% polymer foam material) | Avg. Adhesive Layer Thickness, Side1/Side2 mm (inches) | Article Thickness mm (inches) | Polymer foam material appearance | Flammability | | |
|---|---|---|---|---|---|---|---|---|
| | | | | | | TM 1 | TM 2, 12 sec. burn | TM 2, 60 see. burn |
| 4-6(*) | EXOLIT IFR 23 | 42 | 0.051/0.025 (0.00210.001) | 1.02 (0.040) | holes and bubbles | Fail | NT | NT |
| | EXPANT ROL | 8 | | | | | | |
| 4-7(*) | EXOLIT IFR 23 | 42 | 0.025/0.025 (0.001/0.001) | 0.965 (0.038) | many bubbles | Fail | NT | NT |
| | GRAFGUARD | 8 | | | | | | |
| 4-8(*) | FR 370 containing 3.4% by wt. glass bubbles | 43 | 0.127/0.102 (0.005/0.004) | 0.787 (0.031) | no bubble, smooth surface | Pass V-0 rating | Pass | Pass |
| 4-9(*) | EXOLIT AP 750 | 50 | 0.127/0.102 (0.005/0.004) | 0.914 (0.036) | no bubble, smooth surface | Fail | NT | NT |
| 4-10 | EXOLIT AP750 | 41 | 0.102/0.051 (0.004/0.002) | 0.787 (0.031) | no bubble, smooth surface | Pass V. 2 rating | NT | NT |
| | FR 370 | 4 | | | | | | |
| 4-11 | EXOLIT AP 750 | 22.5 | 0.076/0.076 (0.003/0.003) | 0.686 (0.027) | holes and bubbles | Pass V-0 rating | Pass | Fail |
| | FR 370 | 22.5 | | | | | | |
| 4-12 | EXOLIT AP 750 | 35 | 0.10210.076 (0.004/0.003) | 0.813 (0.032) | many bubbles | Pass V-0 rating | Pass | Fail |
| | FR 370 | 15 | | | | | | |
| 4-13 | EXOLIT AP 750 | 50 | 0.10210.076 (0.004/0.003) | 0.787 (0.031) | no bubble, smooth surface | Pass V-0 rating | Pass | Fail |
| | FR 370 | 5 | | | | | | |
| 4-14 | EXOLIT AP 750 | 27.5 | 0.076/0.051 (0.003/0.002) | 0.864 (0.034) | no bubble, smooth surface | Pass V-0 rating | Pass | Pass |
| | FR 370 | 27.5 | | | | | | |
| (a) NT = not tested (*) Reference Example | | | | | | | | |

It is believed that the bubbles observed in the polymer foam material were caused by moisture absorbed by the fire retardant during storage which vaporized at the high processing temperatures..

## Example 5

Eight samples of three layer articles having a pressure sensitive adhesive layer on both outer surfaces of a fire retardant containing polymer foam core were prepared by the process of Example 1. The measured e-beam dose was 6 megaRads on both sides. The feed rate of the precompounded pressure sensitive adhesive was 6.36 kg/hour (14 lbs/hr). The feed rate of the fire retardant was adjusted based on this rate to provide the desired amount of fire retardant in the polymer foam material. For example, for the fire retardant loading of 50 % by weight, the feed rate of the fire retardant was 6.36 kg/hour or 14 lbs/hr.

Thickness of the resultant article was determined as follows:

203 mm wide (8 inch) strips were cut from the cross direction of the article and the thickness of each pressure sensitive adhesive layer and the overall thickness of the strip was measured with a microscope at three distances along the 203 mm (8 inch) direction: at approximately 25.4 mm (1 inch) (D1), at approximately 101 mm (4 inches)(D2), and at approximately 178 mm (7 inches)(D3). Thickness was measured in "mils" and converted to millimeters (mm) and are reported in Table 4.

**Table 4**

| Sample No. | Adhesive Layer Thickness, Side 1, mm (mils) | | | Adhesive Layer Thickness, Side 2, mm (mils) | | | Article Thickness, mm (mils) | | |
|---|---|---|---|---|---|---|---|---|---|
| | D1 | D2 | D3 | D1 | D2 | D3 | D1 | D2 | D3 |
| 5-1 | 0.057 (2.25) | 0.096 (3.80) | 0.074 (2.90) | 0.057 (2.25) | 0.046 (1.80) | 0.057 (2.25) | 0.93 (36.65) | 1.04 (40.95) | 1.01 (39.70) |
| 5-2 | 0.116 (4.55) | 0.086 (3.40) | 0.067 (2.65) | 0.067 (2.65) | 0.052 (2.05) | 0.080 (3.15) | 1.48 (58.40) | 1.55 (61.20) | 1.33 (52.45) |
| 5-3 | 0.081 (3.20) | 0.052 (2.05) | 0.060 (2.35) | 0.072 (2.85) | 0.039 (1.55) | 0.071 (2.80) | 1.02 (40.25) | 1.14 (45.05) | 1.13 (44.65) |
| 5-4 | 0.084 (3.30) | 0.077 (3.05) | 0.071 (2.80) | 0.090 (3.55) | 0.063 (2.50) | 0.072 (2.85) | 1.03 (40.50) | 1.08 (42.35) | 0.91 (36.05) |
| 5-5 | 0.067 (2.65) | 0.076 (3.00) | 0.088 (3.45) | 0.074 (2.90) | 0.042 (1.65) | 0.072 (2.85) | 1.01 (39.65) | 1.07 (42.00) | 1.06 (41.90) |
| 5-6 | 0.043 (1.70) | 0.063 (2.50) | 0.082 (3.25) | 0.063 (2.50) | 0.033 (1.30) | 0.066 (2.60) | 0.98 (38.75) | 1.13 (44.65) | 1.01 (39.80) |
| 5-7 | 0.077 (3.05) | 0.066 (2.60) | 0.072 (2.85) | 0.063 (2.50) | 0.029 (1.15) | 0.067 (2.65) | 1.08 (42.50) | 1.13 (44.40) | 0.91 (36.20) |
| 5-8 | 0.082 (3.25) | 0.061 (2.40) | 0.081 (3.20) | 0.037 (1.45) | 0.029 (1.15) | 0.074 (2.90) | 1.04 (40.90) | 1.17 (45.95) | 0.96 (37.85) |

## Reference Example 6

Additional test strips were cut from each of the eight test samples of three layer articles prepared as in Example 5. The test strips were tested for flammability according to the TM 2 at 12 Second Vertical Burn and 60 Second Vertical Burn. The values reported are the average of two replicates except for 6-8 for which only one replicate was tested.

The fire retardants used, the amount of fire retardant, and the 12 Second Vertical Bum results are given in Table 5. Those samples that passed the 12 Second Vertical Bum were tested for 60 Second Vertical Burn. Results are given in Table 6.

**Table 5**

| Sample No. | Fire Retardant | Amt Fire Retardant (wt% polymer foam material) | TM 2,12 Second Vertical Burn Results | | | | |
|---|---|---|---|---|---|---|---|
| | | | Drippings | Dripping Burn Time (seconds) | Flame Time (seconds) | Burn Length, mm (incites) | Pass/Fail |
| 6-1 | FR 370 | 35 | no | 0 | 0 | 33.27 (1.31) | Pass |
| 6-2 | FR 370 | 30 | no/yes (a) | 0.5 | 3.85 | 45.97 (1.81) | Pass |

(continued)

| Sample No. | Fire Retardant | Amt Fire Retardant (wt% polymer foam material) | TM 2,12 Second Vertical Burn Results | | | | |
|---|---|---|---|---|---|---|---|
| | | | Drippings | Dripping Burn Time (seconds) | Flame Time (seconds) | Burn Length, mm (incites) | Pass/Fail |
| 6-3 | FR370 | 29.55 | no | 0 | 0 | 60.33 (2.375) | Pass |
| | FLAMESTAB NOR 116 | 1.42 | | | | | |
| 6-4 | EXOLIT IFR 23 | 42 | no | 0 | 0 | 3.175 (0.125) | Pass |
| | FLAMESTAB NOR 116 | 8 | | | | | |
| 6-5 | EXOLIT IFR 50 23 | | no | 0 | 0 | 3.175 (0.125) | Pass |
| 6-6 | EXOLIT IFR 23 | 49.49 | no | 0 | 0 | 2.29 (0.09) | Pass |
| | FLAMESTAB NOR 116 | 1.01 | | | | | |
| 6-7 | EXOLIT IFR 23 | 39.65 | yes | 4 | >38 | 104.9 (4.13) | Fail |
| | FLAMESTAB NOR 116 | 1.23 | | | | | |
| 6-8 | EXOLIT IFR 23 | 29.55 | yes | 3 | >38 | >t27 (>5) | Fail |
| | FLAMESTAB NOR 116 | 1.42 | | | | | |
| (a) One out of two replicates dripped | | | | | | | |

**Table 6**

| Sample No. | Fire Retardant | Amt. of Fire Retardant (wt.% polymer foam material) | TM 2, 60 Second Vertical Burn Results | | | | |
|---|---|---|---|---|---|---|---|
| | | | Drippings | Dripping Bum Time (seconds) | Flame Time (seconds) | Burn Length, mm (inches) | Pass/Fail |
| 6-1 | FR 370 | 35 | yes | 0 | 0 | 33.27 (1.31) | Pass |
| 6-2 | FR 370 | 30 | yes | 0 | 0 | 45.97 (1.81) | Pass |
| 6-3 | FR 370 | 29.55 | yes | 0 | 0 | 60.33 (2.375) | Pass |
| | FLAMESTAB OR 116 | 1.42 | | | | | |

(continued)

| Sample No. | Fire Retardant | Amt. of Fire Retardant (wt.% polymer foam material) | TM 2, 60 Second Vertical Burn Results | | | | |
|---|---|---|---|---|---|---|---|
| | | | Drippings | Dripping Bum Time (seconds) | Flame Time (seconds) | Burn Length, mm (inches) | Pass/Fail |
| 6-4 | EXOLITIFR 23 | 42 | yes/no(a) | 0 | 0 | 3.175 (0.125) | Pass |
| | FLAMESTAB NOR 116 | 8 | | | | | |
| (a) One out of two replicates dripped | | | | | | | |

### Reference Example 7

Test strips cut from Samples 6-1 through 6-8 were tested for 90 Degree peel adhesion and foam split strength against various test panels according to the test methods "90 Degree Peel Adhesion" and "Foam Split Strength."

Peel adhesion and foam split strength were recorded in lbs/inch width (piw) and converted to kilonewtons /meter (kN/m). The values reported are the average of two replicates except for Sample No. 6-4 which was only one replicate. The failure mode of the bond was also noted. Results are given in Table 7.

**Table 7**

| Sample No. | Foam Split Strength, kN/m (piw), failure mode | 90 Deg. Peel Adhesion, kN/m (piw), failure mode | |
|---|---|---|---|
| | Anodized Aluminum | Glass | Stainless Steel |
| 7-1 | 5.83 (33.3) FS[a] | 3.38 (19.3) AR[b] | 3.55 (20.3) AR |
| 7-2 | 7.11 1 (40.6) FS | 6.60 (37.7) AR | 4.45 (25.4) AR |
| 7-3 | 5.78 (33.0) FS | 3.01 (17.2) AR | 3.15 (18.0) AR |
| 7-4 | 3.69 (21.1) FS | 1.84 (10.5) AR | 1.38 (7.9) AR |
| 7-5 | 4.59 (26.2) FS | 3.73 (21.3) FS | 1.44 (8.2) AR |
| 7-6 | 4.85 (27.7) FS | 1.26 (7.2) AR | 1.70 (9.7) AR |
| 7-7 | 5.22 (29.8) FS | 3.83 (21.9) AR | 2.66 (15.2) AR |
| 7-8 | 6.81 (38.9) FS | 3.50 (20.0) AR | 2.99 (17. 1) AR |
| (a) FS = foam split (b) AR = adhesive release from substrate | | | |

### Reference Example 8

Test strips cut from Samples 6-1 through 6-8 were tested for static shear strength, dynamic shear strength, and T-block dynamic tensile strength according to the test methods outlined hereinabove.

Dynamic shear strength and T-block dynamic tensile strength were recorded in Ibs/square inch (psi) and converted to megapascals (MPa). The static shear strength reported is the average of two replicates. The dynamic shear strength and T-block dynamic tensile strength reported is the average of three replicates. The failure mode of the bond was also noted. Results are given in Table 8.

**Table 8**

| Sample No. | Static Shear Strength, minutes | Dynamic Shear Strength, MPa (psi) | T-Block Dynamic Shear Strength, MPa (psi) |
|---|---|---|---|
| 8-1 | >10,004 | 1.06 (153.2) AR[b] | 1.19 (172.7) AR |
| 8-2 | 16.3, FS[a] | 0.983 (142.3) AR | 1.06 (153.4) AR |
| 8-3 | >10,000 | 1.29 (186.6) AR | 1.06 (153.4) AR |
| 8-4 | >10,000[c] | 1.27 (184.7) AR | 1. 165 (169.2) AR |
| 8-5 | > 10,000 | 1.23 (178.1) AR | 1.08 (156.8)AR |
| 8-6 | 2868.4 | 1.215 (176.4) AR | 1.I4 (160.1) AR |
| 8-7 | >10,000 | 1.14 (165.5) AR | 0.975 (141.6) AR |
| 8-8 | >10,000 | I.I2 (162.7) AR | 0.83 (120.4) AR |

(a) FS = foam split
(b) AR = adhesive release from substrate.
(c) three replicates tested: two were > 10,000; one was 137.4 minutes with FS. ,

It is believed that the samples that did not achieve 10,000 minutes of Static Shear Strength were not crosslinked enough. If the samples were exposed to a higher e-beam dose of 8 megarads, it is believed they would have achieved at least 10,000 minutes.

In this example, the effect of polymer foam material thickness and pressure sensitive adhesive layer thickness on the flammability performance was determined.

Seven samples of three layer articles having a pressure sensitive adhesive layer on both outer surfaces of a fire retardant containing polymer foam material were prepared as in Example 1 with the following exceptions: the fire retardant, the CLOEREN multilayer die having a 1 mm (0.040 inches) gap. The coating speed was adjusted to provide the desired (i.e., target) thickness of the polymer foam material. The extrusion rate of the pressure sensitive adhesive layers was adjusted to provide the target skin adhesive thickness. The e-beam conditions were as specified in Table 9.

The resultant article was then tested for thickness of each adhesive layer, thickness of polymer foam material, and flammability performance properties. The fire retardant, amount used, and thickness are given in Table 9. Flammability results are given in Table 10.

**Table 9**

| Sample No. | Fire Retardant | Amt. of Fire Retardant (wt. % of polymer foam material) | E-beam voltage, (keV); Dose (Mrads) | Article Thickness, mm (inches) | | Adhesive Layer Thickness, mm (inches) | | |
|---|---|---|---|---|---|---|---|---|
| | | | | Target | Actual | Target | Side 1, Actual | Side 2, Actual |
| 9-1 | EXOLIT IFR 23 | 48.29 | 300/8 | 1.02 (0.040) | 0.82 (0.0322) | 0.076 (0.003) | 0.086 (0.0034) | 0.071 (0.0028) |
| | FLAMSTAB NOR 116 | 1.71 | | | | | | |
| 9-2 | EXOLIT IFR 23 | 48.29 | 300/8 | 0.89 (0.035) | 0.87 (0.0344) | 0.076 (0.003) | 0.067 (0.0027) | 0.124 (0.0049) |
| | FLAMSTAB NOR 116 | 1.71 | | | | | | |
| 9-3 | EXOLIT IFR 23 | 48.29 | 300 / 6 | 0.76 (0.030) | 0.76 (0.0298) | 0.076 (0.003) | 0.097 (0.0038) | 0.069 (0.0027) |
| | FLAMSTAB NOR 116 | 1.71 | | | | | | |

(continued)

| Sample No. | Fire Retardant | Amt. of Fire Retardant (wt. % of polymer foam material) | E-beam voltage, (keV); Dose (Mrads) | Article Thickness, mm (inches) | | Adhesive Layer Thickness, mm (inches) | | |
|---|---|---|---|---|---|---|---|---|
| | | | | Target | Actual | Target | Side 1, Actual | Side 2, Actual |
| 9-4 | EXOLIT IFR 23 | 48.29 | 250/6 | 0.635 (0.025) | 0.62 (0.0243) | 0.063 (0.0025) | 0.064 (0.0025) | 0.076 (0.0030) |
| | FLAMSTAB NOR 116 | 1.71 | | | | | | |
| 9-5 | EXOLIT IFR 23 | 48.29 | 250/6 | 0.51 (0.020) | 0.53 (0.021) | 0.051 (0.002) | 0.036 (0.0014) | 0.071 (0.0028) |
| | FLAMSTAB NOR 116 | 1.71 | | | | | | |
| 9-6 | EXOLIT IFR 23 | 48.29 | 300 /8 | 1.02 (0.040) | 0.92 (0.0362)- | 0.076 (0.003) | 0.086 (0.0034) | 0.076 (0.003) |
| | FLAMSTAB NOR 116 | 1.71 | | | | | | |
| 9-7 | EXOLIT IFR 23 | 50 | 300/8 | 1.02 (0.040) | 0.86 (0.0337) | 0.076 (0.003) | 0.056 (0.0022) | 0.046 (0.0018) |

**Table 10**

| S A M P L E | R U N | TM 2,12 Second Vertical Burn Results | | | | | TM 2, 60 Second Vertical Burn Results | | | | |
|---|---|---|---|---|---|---|---|---|---|---|---|
| | | Dripping | Dripping Burn Time (see) | Flame Time, sec. | Burn length mm (in.) | Pass/ Fail | Drip -ping | Dripping Burn Time (sec) | Flame Time, (sec) | Burn length , mm (in.) | Pass/Fail |
| 9-1 | 1 | yes | 5+ | 16.44 | 114.3 (4.5) | Fail | NT (a) | NT | NT | NT | NT |
| | 2 | yes | >5 | >15 | >203 (>8) | Fail | NT | NT | NT | NT | NT |
| 9-2 | 1 | yes | 0 | 1 | 635 (0.25) | Pass | yes | 2 or less | 0 | 63.5 (2.5) | Pass |
| | 2 | yes | 0 | 0 | 6.35 (0.25) | Pass | yes | 0 | 0 | 44.5 (1.75) | Pass |
| | 3 | yes | 0 | 0 | 6.35 (0.25) | Pass | yes | 0 | 0 | 57.2 (2.25) | Pass |
| 9-3 | 1 | yes | 2 | 3.22 | 38.1 (1.5) | Pass | yes | 2 or less | 0 | 178 (7) | Fail |
| | 2 | yes | 0 | 2 | 44.5 (1.75) | Pass | yes | 1 | 0 | 191 (7.5) | Fail |
| | 3 | yes | >5 | >15 | 152 (6) | Fail | NT | NT | NT | NT | NT |
| 9-4 | 1 | yes | 2-4 | 3.69 | 69.9 (2.75) | Pass | yes | 2 or less | 0 | 127 (5) | Pass |
| | 2 | yes | 0 | 5 | 76.2 (3) | Pass | yes | 2 or less | 0 | 146 (5.75) | Pass |
| | 3 | yes | 0 | >15 | >178 (>7) | Fail | yes | 2 or less | 0 | 178 (7) | Fail |
| 9-5 | 1 | yes | 2-3 | 17.93 | 191 (7.5) | Fail | NT | NT | NT | NT | NT |
| | 2 | yes | 1 | 14.01 | 184 (7.25) | Pass | NT | NT | NT | NT | NT |
| | 3 | yes | >5 | 15.74 | 203 (8) | Fail | NT | NT | NT | NT | NT |
| 9-6 | | yes | 2.5+ | 21.72 | 127 (5) | Fail | NT | NT | NT | NT | NT |
| | 2 | yes | >5 | >15 | >203 (>8) | Fail | NT | NT | NT | NT | NT |
| 9-7 | 1 | yes | 2 | 5.07 | 12.7 (0.5) | Pass | yes | 3+ | 15+ | 229 (9) | Fail |
| | 2 | yes | >5 | >15 | 305 (12) | Fail | NT | NT | NT | NT | NT |
| (a) NT = not tested | | | | | | | | | | | |

## Reference Example 10

Test strips cut from Samples 9-1 through 9-7 were tested for 90 Degree peel adhesion and foam split strength against various test panels according to the test method "90 Degree Peel Adhesion" and "Foam Split Strength." Peel adhesion and foam split strength were recorded in lbs/inch width (piw) and converted to kilonewtons /meter (kN/m) and represents the average of all values measured from the start to the end of the peel area. The values reported are the average of two replicates. The failure mode of the bond was also noted. Results are given in Table 11.

**Table 11**

| Sample No. | Foam Split Strength, kN/m (piw), failure mode | 90 Deg. Peel Adhesion, kN/m (piw), failure mode | |
| | Anodized Aluminum | Glass | Stainless Steel |
| --- | --- | --- | --- |
| 10-1 | 4.18 (23.9) FS[a] | 2.73 (15.6) AR | 1.93 (11.0) AR |
| 10-2 | 1.73 (9.9) 75% FSt25% AR[b] | 0.68 (3.9) AR | 0.91 (5.2) AR |
| 10-3 | 3.20 (18.3) FS | 2.29(i3.1)50%FS/ 50% AR | 2.92(16.7)FS |
| 10-4 | 2.63(15.0)FS | 1.77 (10.1) 25% FS / 75% AR | 1.19(6.8)AR |
| 10-5 | 2.31 (13.2) FS | 0.93 (5.3) AR | 0.67 (3.8) AR |
| 10-6 | 2.96 (16.9) 75% FS / 25% AR | 1.42 (8.1) AR | 0.81 (4.6) AR |
| 10-7 | 3.92 (22.4) FS | 2.52 (14.4)75% FS 25% AR | 2.21 (12.6)AR |
| (a) FS = foam split<br>(b) AR = adhesive release from test substrate | | | |

## Reference Example 11

Test strips cut from Samples 9-1 through 9-7 were tested for static shear strength, dynamic shear strength, and T-block dynamic tensile strength according to the test methods outlined hereinabove.

Dynamic shear strength and T-block dynamic tensile strength were recorded in lbs/square inch (psi) and converted to megapascals (MPa). The static shear strength reported is the average of two replicates. The dynamic shear strength and T-block dynamic tensile strength reported is the average of three replicates. The failure mode of the bond was also noted. Results are given in Table 12.

**Table 12**

| Sample No. | Static Shear Strength, minutes | Dynamic Shear Strength, MPa (psi) | T-Block Dynamic Shear Strength, MPa (psi) |
| --- | --- | --- | --- |
| 11-1 | >10,000 | 1.05 (152. 1) FS | 1.056 (153.3) AR[c] |
| 11-2 | >10,000 | 1.35 (195.9) FS | 1.09 (158.7) 75% AR / 25% FS |
| 11-3 | >10,000 | 1.31 (189.6) FS | 1. 10 (159.6) AR |
| 11-4 | >217.5[a] FS[b] | 1.37 (199.2) FS | !.t6S(t69.t)75%FS/ 25% AR |
| 11-5 | >10,000 | 1.32 (191.2) FS | 1.19 (172.8) FS |
| 11-6 | >10,000 | 1.23 (178.7) FS | 1.17 (169.5) 67% FS 33% AR |
| 11-7 | >10,000 | 1.35 (196.3) FS | 1.11 (161.8) FP[d] |
| (a) Believe samples would pass if irradiated more.<br>(b) FS = foam split<br>(c) AR = adhesive release from test substrate<br>(d) FP = foam "picking" leaving small amount of foam residue on T-block surface. | | | |

**Claims**

1. A flame retardant article, comprising:

an expanded polymeric foam material comprising a polymer, antimony-free fire retardant and a plurality of expanded polymeric microspheres, the foam material having a first major surface and a second major surface; the antimony free fire retardant being an intumescent material comprising an acid source, a char former, a blowing agent and one or more synergists selected from the group consisting of n-alkoxy hindered amine, trisi (tribromoneopentyl)phosohate melamine phosphate, melamine polyphosphate, and boroxo siloxane elastomer; and
an adhesive layer disposed on at least a portion of one of the first or second major surfaces, the adhesive layer being formulated without fire retardant;

wherein the article will pass one or more of the following the F.A.R. §25.853 (July 1990), 12 Second Vertical Burn Test; F.A.R. §25.853 (July 1990), 60 Second Vertical Burn Test; UL-94 V-2 rating; ASTM E162 with maximum flame spread index of 35; ASTM E662 with maximum specific optical density for flaming and nonflaming modes of 100 maximum (1.5 minutes) and 200 maximum (4.0 minutes); and BSS 7239.

2. An article according to claim 1 wherein the article has a foam split strength greater than 2.64 kN/m (15 lbs/inch); 90 degree peel adhesion on stainless steel of greater than 2.64 kN/m (15 lbs/inch); and static shear strength at 70°C or 22 °C of at least 10,000 minutes.

3. An article according to claim 1 wherein the polymeric foam material is selected from the group consisting of elastomers, rubbers, thermoplastic elastomers, rubber based and acrylic adhesives, polyolefin polymers, acrylate polymers and methacrylate polymers, acrylate and methacrylate copolymers, and combinations thereof.

4. An article according to claim 1 wherein the adhesive layer is selected from the group consisting of a copolymer of ethylhexyl acrylate and acrylic acid, a copolymer of isooctyl acrylate and acrylic acid, and a blend of an acrylic adhesive and rubber based adhesive,

5. An article according to claim 1 wherein the adhesive layer further comprises microfibers imparting stretch release properties to the article, the microfibers being selected from the group consisting of polymeric microfibers, viscoelastic microfibers, elastic microfibers, and combinations of the foregoing.

6. A method for preparing a fire retardant foam article, comprising:

(a) melt mixing a polymer composition, antimony-free fire retardant and a plurality of expandable microspheres, to form an expandable extrudable composition, the antimony free fire retardant being an intumescent material comprising an acid source, a char former, a blowing agent and one or more synergists selected from the group consisting of n-alkoxy hindered amine, tris(tribromoneopentvl)ohosphate, melamine phosphate, melamine polyphosphate, and boroxo siloxane elastomer;
(b) at least partially expanding one or more of the expandable microspheres;
(c) extruding the expandable extrudable composition through a die to form a foam having an outer surface; and
(d) applying an adhesive composition onto at least a portion of the outer surface of the foam, the adhesive layer being formulated without fire retardant;

wherein the article will pass one or more of the following: the F.A.R. §25.853 (July 1990), 12 Second Vertical Burn Test, F.A.R. §25.853 (July 1990); F.A.R. §25.853 (July 1990), 60 Second Vertical Burn Test; UL-94 V-2 rating; ASTM E162 with maximum flame spread index of 35; ASTM E662 with maximum specific optical density for flaming and nonflaming modes of 100 maximum (1.5 minutes) and 200 maximum (4.0 minutes); and BSS 7239.

7. A method according to claim 6 wherein the melt mixing in step (a) comprises the selection of the polymer composition from the group consisting of elastomers, rubbers, thermoplastic elastomers, rubber based and acrylic adhesives, polyolefin polymers, acrylate polymers and methacrylate polymers, acrylate and methacrylate copolymers, and combinations thereof.

8. A method according to claim 6 wherein applying an adhesive composition in step (d) comprises selecting the adhesive composition from the group consisting of a copolymer of ethylhexyl acrylate and acrylic acid, a copolymer of isooctyl acrylate and acrylic acid, and a blend of an acrylic adhesive and rubber based adhesive.

9. A method according to claim 6 wherein melt mixing in step (a) includes mixing the polymer composition and the antimony free fire retardant with a plurality of expandable microspheres; step (b) comprises at least partially expanding a plurality of the expandable microspheres after the melt mixing step and before extruding the expandable extrudable composition through a die in step (c).

10. A method according to claim 6 wherein the melt mixing in step (a) further comprises adding fiber-forming resins capable of forming microfibers; forming *in situ* the microfibers from the resins during step (c) to provide the fire retardant article with stretch release properties, the fiber-forming resins comprising copolymers of polyalkylene resins.

**Patentansprüche**

1. Flammgeschützter Artikel, mit:

einem aufgeschäumten Polymerschaummaterial umfassend ein Polymer, antimonfreies Brandschutzmittel und mehrere aufgeschäumte Polymermikrosphären, wobei das Schaummaterial eine erste Hauptfläche und eine zweite Hauptfläche aufweist;
wobei das antimonfreie Brandschutzmittel ein sich aufblähendes Material ist, umfassend eine Säurequelle, einen Kohlebildner, ein Treibmittel und einen oder mehrere Synergisten ausgewählt aus der Gruppe bestehend aus n-Alkoxy-gehindertem Amin, Tris(tribromneopentyl)phosphat, Melaminphosphat, Melaminpolyphosphat und Boroxosiloxanelastomer; und
einer Klebstoffschicht, die sich auf mindestens einem Teil der ersten oder zweiten Hauptfläche befindet, wobei die Klebstoffschicht ohne Brandschutzmittel formuliert ist;

wobei der Artikel einen oder mehrere der folgenden Tests besteht: den F.A.R. 12 Sekunden-Senkrechtbrenntest nach §25.853 (Juli 1990); den F.A.R. 60 Sekunden-Senkrechtbrenntest nach §25.853 (Juli 1990); die UL-94 V-2-Einstufung; ASTM E162 mit einem maximalen Flammenausbreitungsindex von 35; ASTM E662 mit einer maximalen spezifischen optischen Dichte für Flamm- und Nichtflammmodi von maximal 100 (1,5 Minuten) und maximal 200 (4,0 Minuten); und BSS 7239.

2. Artikel nach Anspruch 1, wobei der Artikel eine Schaumtrennstärke von mehr als 2,64 kN/m (15 Pfund/Zoll); eine 90°-Abschälhaftung auf Edelstahl von mehr als 2,64 kN/m (15 Pfund/Zoll); und eine statische Scherfestigkeit bei 70 °C oder 22 °C von mindestens 10 000 Minuten aufweist.

3. Artikel nach Anspruch 1, wobei das Polymerschaummaterial aus der Gruppe bestehend aus Elastomeren, Kautschuken, thermoplastischen Elastomeren, Klebstoffen auf Kautschuk- und Acrylbasis, Polyolefinpolymeren, Acrylatpolymeren und Methacrylatpolymeren, Acrylat- und Methacrylatcopolymeren und Kombinationen derselben ausgewählt ist.

4. Artikel nach Anspruch 1, wobei die Klebstoffschicht aus der Gruppe bestehend aus einem Copolymer von Ethylhexylacrylat und Acrylsäure, einem Copolymer von Isooctylacrylat und Acrylsäure und einer Mischung eines Acrylklebstoffs und eines Klebstoffs auf Kautschukbasis ausgewählt ist.

5. Artikel nach Anspruch 1, wobei die Klebstoffschicht ferner Mikrofasern umfasst, die dem Artikel Streckablösungseigenschaften verleihen, wobei die Mikrofasern aus der Gruppe bestehend aus Polymermikrofasern, viskoelastischen Mikrofasern, elastischen Mikrofasern und Kombinationen der vorhergehenden ausgewählt sind.

6. Verfahren für die Herstellung eines flammgeschützten Schaumstoffartikels umfassend:

(a) das Schmelzspinnen einer Polymerzusammensetzung, eines antimonfreien Brandschutzmittels und mehrerer aufschäumbarer Mikrosphären unter Bildung einer aufschäumbaren, extrudierbaren Zusammensetzung, wobei das antimonfreie Brandschutzmittel ein sich aufblähendes Material ist, umfassend eine Säurequelle, einen Kohlebildner, ein Treibmittel und einen oder mehrere Synergisten ausgewählt aus der Gruppe bestehend aus n-Alkoxy-gehindertem Amin, Tris(tribromneopentyl)phosphat, Melaminphosphat, Melaminpolyphosphat und Boroxosiloxanelastomer;

(b) das mindestens teilweise Aufschäumen einer oder mehrerer aufschäumbarer Mikrosphären;

(c) das Extrudieren der aufschäumbaren, extrudierbaren Zusammensetzung durch eine Düse unter Bildung eines Schaums, der eine Außenfläche aufweist; und

(d) das Aufbringen einer Klebstoffzusammensetzung auf mindestens einen Teil der Außenfläche des Schaums, wobei die Klebstoffschicht ohne Brandschutzmittel formuliert ist;

wobei der Artikel einen oder mehrere der folgenden Tests besteht: den F.A.R. 12 Sekunden-Senkrechtbrenntest nach §25.853 (Juli 1990); den F.A.R. 60 Sekunden-Senkrechtbrenntest nach §25.853 (Juli 1990); die UL-94 V-2 Einstufung; ASTM E162 mit einem maximalen Flammenausbreitungsindex von 34; ASTM E662 mit einer maximalen spezifischen optischen Dichte für Flamm- und Nichtflammmodi von maximal 100 (1,5 Minuten) und maximal 200 (4,0 Minuten); und BSS 7239.

7. Verfahren nach Anspruch 6, wobei das Schmelzspinnen in Schritt (a) das Auswählen der Polymerzusammensetzung aus der Gruppe bestehend aus Elastomeren, Kautschuken, thermoplastischen Elastomeren, Klebstoffen auf Kautschuk- und Acrylbasis, Polyolefinpolymeren, Acrylatpolymeren und Methacrylatpolymeren, Acrylat- und Methacrylatcopolymeren und Kombinationen derselben umfasst.

8. Verfahren nach Anspruch 6, wobei das Aufbringen einer Klebstoffzusammensetzung in Schritt (d) das Auswählen der Klebstoffzusammensetzung aus der Gruppe bestehend aus einem Copolymer von Ethylhexylacrylat und Acrylsäure, einem Copolymer von Isooctylacrylat und Acrylsäure und einer Mischung eines Acrylklebstoffs und eines Klebstoffs auf Kautschukbasis umfasst.

9. Verfahren nach Anspruch 6, wobei das Schmelzmischen in Schritt (a) das Mischen der Polymerzusammensetzung und des antimonfreien Brandschutzmittels mit mehreren aufschäumbaren Mikrosphären einschließt; Schritt (b) das mindestens teilweise Aufschäumen mehrerer der aufschäumbaren Mikrosphären nach dem Schmelzmischschritt und vor dem Extrudieren der aufschäumbaren, extrudierbaren Zusammensetzung durch eine Düse in Schritt (c) umfasst.

10. Verfahren nach Anspruch 6, wobei das Schmelzmischen in Schritt (a) ferner das Zusetzen von faserbildenden Harzen, die Mikrofasern bilden können; das Bilden in situ der Mikrofasern aus den Harzen während des Schritts (c) umfasst, um dem flammgeschützten Artikel Streckablösungseigenschaften zu verleihen, wobei die faserbildenden Harze Copolymere von Polyalkylenharzen umfassen.

**Revendications**

1. Article ignifuge, comprenant :

une mousse polymère expansée comprenant un polymère, un ignifugeant sans antimoine et une pluralité de microsphères polymères expansées, la mousse comportant une première surface principale et une deuxième surface principale ;

l'ignifugeant sans antimoine étant un matériau intumescent comprenant une source d'acide, un agent formant un résidu charbonneux, un agent gonflant et un ou plusieurs additifs synergiques choisis dans le groupe constitué par les n-alcoxyamines stériquement encombrées, le tris(tribromonéopentyl)phosphate, le phosphate de mélamine, le polyphosphate de mélamine et les élastomères de boroxosiloxane ; et

une couche adhésive disposée sur au moins une partie de l'une des première et deuxième surfaces principales, la couche adhésive étant formulée sans ignifugeant ;

l'article respectant l'une ou plusieurs des normes suivantes : F.A.R. §25.853 (juillet 1990), essai de combustion verticale de 12 secondes ; F.A.R. §25.853 (juillet 1990), essai de combustion verticale de 60 secondes ; UL-94, classe V-2 ; ASTM E162 avec un indice de propagation des flammes maximal de 35 ; ASTM E662 avec une densité optique spécifique maximale pour les modes avec flammes et sans flammes de 100 maximum (1,5 minute) et 200 maximum (4,0 minutes) ; et BSS 7239.

2. Article selon la revendication 1, l'article présentant une résistance à la déchirure de la mousse supérieure à 2,69 kN/m (15 1b/pouce) ; une résistance au décollement à 90 degrés sur de l'acier inoxydable supérieure à 2,64 kN/m (15 lb/pouce) ; et une résistance au cisaillement statique à 70 °C ou 22 °C d'au moins 10 000 minutes.

**3.** Article selon la revendication 1 dans lequel la mousse polymère est choisie dans le groupe constitué par les élastomères, les caoutchoucs, les élastomères thermoplastiques, les adhésifs à base de caoutchouc et acryliques, les polymères de polyoléfine, les polymères d'acrylate et les polymères de méthacrylate, les copolymères d'acrylate et de méthacrylate, et les combinaisons de ceux-ci.

**4.** Article selon la revendication 1 dans lequel la couche adhésive est choisie dans le groupe constitué par un copolymère d'acrylate d'éthylhexyle et d'acide acrylique, un copolymère d'acrylate d'isooctyle et d'acide acrylique, et un mélange d'un adhésif acrylique et d'un adhésif à base de caoutchouc.

**5.** Article selon la revendication 1 dans lequel la couche adhésive comprend en outre des microfibres conférant à l'article des propriétés de décollement par allongement, les microfibres étant choisies dans le groupe constitué par les microfibres polymères, les microfibres viscoélastiques, les microfibres élastiques et les combinaisons de celles-ci.

**6.** Procédé de préparation d'un article en mousse ignifuge, comprenant :

(a) le mélange à l'état fondu d'une composition polymère, d'un ignifugeant sans antimoine et d'une pluralité de microsphères expansibles pour former une composition expansible extrudable, l'ignifugeant sans antimoine étant un matériau intumescent comprenant une source d'acide, un agent formant un résidu charbonneux, un agent gonflant et un ou plusieurs additifs synergiques choisis dans le groupe constitué par les n-alcoxyamines stériquement encombrées, le tris(tribromonéopentyl)phosphate, le phosphate de mélamine, le polyphosphate de mélamine et les élastomères de boroxosiloxane ;
(b) le gonflement au moins partiel d'une ou de plusieurs des microsphères expansibles ;
(c) l'extrusion de la composition expansible extrudable à travers une filière pour former une mousse comportant une surface extérieure ; et
(d) l'application d'une composition adhésive sur au moins une partie de la surface externe de la mousse, la couche adhésive étant formulée sans ignifugeant ;

dans lequel l'article respecte l'une ou plusieurs des normes suivantes : F.A.R. §25.853 (juillet 1990), essai de combustion verticale de 12 secondes ; F.A.R. §25.853 (juillet 1990), essai de combustion verticale de 60 secondes ; UL-94, classe V-2 ; ASTM E162 avec un indice de propagation des flammes maximal de 35 ; ASTM E662 avec une densité optique spécifique maximale pour les modes avec flammes et sans flammes de 100 maximum (1,5 minute) et 200 maximum (4,0 minutes) ; et BSS 7239.

**7.** Procédé selon la revendication 6 dans lequel le mélange à l'état fondu à l'étape (a) comprend la sélection de la composition polymère dans le groupe constitué par les élastomères, les caoutchoucs, les élastomères thermoplastiques, les adhésifs à base de caoutchouc et acryliques, les polymères de polyoléfine, les polymères d'acrylate et les polymères de méthacrylate, les copolymères d'acrylate et de méthacrylate, et les combinaisons de ceux-ci.

**8.** Procédé selon la revendication 6 dans lequel l'application d'une composition adhésive à l'étape (d) comprend la sélection de la composition adhésive dans le groupe constitué par un copolymère d'acrylate d'éthylhexyle et d'acide acrylique, un copolymère d'acrylate d'isooctyle et d'acide acrylique, et un mélange d'un adhésif acrylique et d'un adhésif à base de caoutchouc.

**9.** Procédé selon la revendication 6 dans lequel le mélange à l'état fondu à l'étape (a) comprend le mélange de la composition polymère et de l'ignifugeant sans antimoine avec une pluralité de microsphères expansibles ; et l'étape (b) comprend le gonflement au moins partiel d'une pluralité des microsphères expansibles après l'étape de mélange à l'état fondu et avant l'extrusion de la composition expansible extrudable à travers une filière à l'étape (c).

**10.** Procédé selon la revendication 6 dans lequel le mélange à l'état fondu à l'étape (a) comprend en outre l'addition de résines formant des fibres susceptibles de former des microfibres ; et la formation *in situ* des microfibres à partir des résines pendant l'étape (c) pour obtenir un article ignifuge avec des propriétés de décollement par allongement, les résines formant des fibres comprenant des copolymères de résines de polyalkylène.

**Fig. 1**

**Fig. 2**

**Fig. 3**

302

300

306

304

**Fig. 4**

400

408

404

402

406

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6103152 A, Gehlsen
- US 6143152 A, Gehlsen
- FR 370
- US 6197397 B1, Sher
- US RE24906 E
- US 5804610 A
- US 5932298 A
- US 4310509 A
- US 4323557 A
- WO 015752 PCT
- US 4472480 A
- US 09775955 B
- US 09764478 B
- US 775955 A
- WO 0157152 A

**Non-patent literature cited in the description**

- **P. ANNA et al.** Influence of Modified Rheology on the Efficiency of Intumescent Flame Retardant Systems. *Polymer Degradation and Stability,* 2001, vol. 74 (3), 423-426